# EUROPÄISCHE PATENTSCHRIFT

(11) **EP 4 432 137 B1**
(45) Veröffentlichungstag und Bekanntmachung des Hinweises auf die Patenterteilung: **19.02.2025**
(21) Anmeldenummer: 23161530.3
(22) Anmeldetag: 13.03.2023
(51) Int. Cl.: G06F 18/22, G06T 7/00, G06V 10/74, G06V 10/764

(54) **VERFAHREN ZUM BETREIBEN EINER KABELVERARBEITUNGSVORRICHTUNG, KABELVERARBEITUNGSVORRICHTUNG, AUSWERTE UND/ODER STEUEREINRICHTUNG FÜR EINE KABELVERARBEITUNGSVORRICHTUNG UND MASCHINENLESBARER PROGRAMMCODE**
METHOD FOR OPERATING A CABLE PROCESSING DEVICE, CABLE PROCESSING DEVICE, EVALUATION AND/OR CONTROL DEVICE FOR A CABLE PROCESSING DEVICE AND MACHINE-READABLE PROGRAM CODE
PROCÉDÉ DE FONCTIONNEMENT D'UN DISPOSITIF DE TRAITEMENT DE CÂBLE, DISPOSITIF DE TRAITEMENT DE CÂBLE, DISPOSITIF D'ÉVALUATION ET/OU DE COMMANDE POUR UN DISPOSITIF DE TRAITEMENT DE CÂBLE ET CODE DE PROGRAMME LISIBLE PAR MACHINE

(43) Veröffentlichungstag der Anmeldung: 18.09.2024
(73) Patentinhaber: MD Elektronik GmbH, 84478 Waldkraiburg (DE)
(72) Erfinder: OHNI, Josef, 84559 Kraiburg a. Inn (DE); OSSNER, Martina, 84144 Geisenhausen (DE); GRANDL, Stefan, 84570 Polling (DE); HOFINGER, Peter, 84137 Vilsbiburg (DE)
(74) Vertreter: Kehl, Ascherl, Liebhoff & Ettmayr Patentanwälte Partnerschaft mbB

(56) Entgegenhaltungen:
- EP-A1- 3 855 359
- US-A1- 2021 049 754

## Beschreibung

### Technisches Gebiet

Die Erfindung betrifft ein Verfahren zum Betreiben einer Kabelverarbeitungsvorrichtung, eine Kabelverarbeitungsvorrichtung, eine Steuereinrichtung für eine Kabelverarbeitungsvorrichtung und einen maschinenlesbaren Programmcode. Die vorliegende Erfindung wird hauptsächlich in Verbindung mit Datenkabeln beschrieben. Es versteht sich, dass die vorliegende Erfindung für jede Art von Kabeln genutzt werden kann.

### Stand der Technik

Bei der Herstellung von Datenkabeln werden die Kabel üblicherweise in einer automatisierten Verarbeitungsanlage bearbeitet und beispielsweise konfektioniert, also auf die entsprechende Länge abgelängt und mit entsprechenden elektrischen Kontakten und/oder Steckern versehen. Eine einzige automatisierte Verarbeitungsanlage umfasst dabei mehrere Stationen, die im Rahmen dieser Anmeldung auch als Kabelverarbeitungseinheit bezeichnet werden. In jeder Kabelverarbeitungseinheit wird ein definierter Verarbeitungsschritt für ein Kabel durchgeführt.

Um eine fehlerfreie Verarbeitung solcher Kabel in großen Stückzahlen zu ermöglichen, müssen die Kabel in der jeweiligen Verarbeitungsanlage auf die korrekte Umsetzung der einzelnen Verarbeitungsschritte überprüft werden. Insbesondere ist es innerhalb einer bestimmten Verarbeitungsanlage erforderlich, vor einzelnen Kabelverarbeitungseinheiten die dieser Kabelverarbeitungseinheit zugeführten bzw. die diese Kabelverarbeitungseinheit verlassenden Kabel dahingehend zu prüfen, ob die Kabel vorgegebenen Anforderungen entsprechen, um weiter verarbeitet werden zu können. Dabei weisen die Kabel in der Regel eine Anfangskonfiguration auf. Dies ist der Zustand, in welchem ein Kabel bzw. ein zu verarbeitendes Kabelteilstück einer Kabelverarbeitungseinheit zugeführt wird. Das Kabel bzw. Kabelteilstück wird dann einem Verarbeitungsschritt unterzogen und von der Anfangskonfiguration in eine Endkonfiguration überführt. Dies ist der Zustand, in welchem ein Kabel bzw. ein Kabelteilstück die das Kabel bzw. Kabelteilstück verarbeitende Kabelverarbeitungseinheit verlässt.

Hierzu ist es bekannt, Kabel bzw. Kabelteilstücke mittels einer Bilderkennung zu erfassen und zu bewerten.

Bildverarbeitungsprogramme, die eine klassisch regelbasierte Objekterkennung zum Gegenstand haben, sind oft unflexibel und aufwendig und teilweise nur sehr schwer zuverlässig zu realisieren.

Daher werden zunehmend KI-basierte Modelle zur Überwachung der Fertigung vorgesehen. Beispielsweise ist aus der Offenlegungsschrift EP 3 855 359 A1 eine Kabelbearbeitungsstation bekannt, welche eine bildgebende Sensoreinrichtung aufweist, mittels welcher ein Kabelende detektierbar ist. Mittels eines Bildverarbeitungssystems werden ein erster und ein zweiter kabelspezifischer Bildparameter erkannt. Auf Grundlage des erkannten ersten und zweiten kabelspezifischen Bildparameters wird mittels des Bildverarbeitungssystems ein steuerungsspezifischer Parameter erstellt, welcher an eine Steuerungseinrichtung zum Steuern eines Werkzeugs übertragen wird. Ein derartiges Verfahren soll ein rasches Nachführen des Kabelbearbeitungsprozesses für erkannte Kabeltypen ermöglichen.

Ferner offenbart US 2021/0049754 A1 ein Verfahren zum Betrieb einer Kabelverarbeitungsvorrichtung umfassend das Zusammenführen eines Elements mit einem Kabel zur Ausbildung einer Verbindung des Kabels mit dem Element, Erfassen eines oberen Bilds und eines unteren Bilds mittels einer Bilderfassungseinrichtung von der Verbindung des Kabels mit dem Element, Analysieren des oberen und des unteren Bildes zur Identifikation eines Defekts und Ausgabe eines erkannten Defekts. Hierzu ist aus D2 bekannt, ein KI-Programm zur Objekterkennung zu verwenden. Die KI-basierte Objekterkennung kann ferner dazu ausgebildet sein, eine Defektdetektion durchzuführen.

Es hat sich gezeigt, dass auch derartige Verfahren einer weiteren Verbesserung bedürfen, da die Zuverlässigkeit und Genauigkeit für die Problemstellungen der Fertigung häufig nicht ausreichend hoch sind.

### Beschreibung der Erfindung

Es ist Aufgabe der Erfindung, eine Lösung bereitzustellen, mit dem eine robuste Möglichkeit geschaffen wird, eine Endkonfiguration eines Kabelteilstücks zuverlässig und schnell zu ermitteln und damit den Prozess der Kabelverarbeitung weiter zu verbessern.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben. Insbesondere können die unabhängigen Ansprüche einer Anspruchskategorie auch analog zu den abhängigen Ansprüchen einer anderen Anspruchskategorie weitergebildet sein. Weitere Ausführungsformen und Weiterbildungen ergeben sich aus den Unteransprüchen sowie aus der Beschreibung unter Bezugnahme auf die Figuren.

Die vorliegende Erfindung betrifft insbesondere ein Verfahren zum Betreiben einer Kabelverarbeitungsvorrichtung, umfassend das Verarbeiten wenigstens eines Kabelteilstücks, insbesondere eines Kabelendes, mittels einer Kabelverarbeitungseinheit von einer Anfangskonfiguration zu einer Endkonfiguration. Dabei wird wenigstens ein Bild der wenigstens einen Endkonfiguration mittels einer Bildaufnahmeeinrichtung erfasst. Es wird ein trainiertes neuronales Netz auf das wenigstens eine erfasste Bild angewendet, wobei das trainierte neuronale Netz dazu ausgebildet ist, in einem ersten Schritt wenigstens einen interessierenden Bereich der wenigstens einen Endkonfiguration aus dem wenigstens einen erfassten Bild zu ermitteln und dasselbe neuronale Netz dazu ausgebildet ist, in einem zweiten Schritt eine Klassifikation des wenigstens einen ermittelten interessierenden Bereichs hinsichtlich des Vorliegens wenigstens eines angelernten Fehlerbilds der wenigstens einen Endkonfiguration zu ermitteln und ein der Klassifikation zugeordnetes Ergebnis zu ermitteln. Es wird dann ein Steuersignal erzeugt, abhängig vom wenigstens einen ermittelten interessierenden Bereich und abhängig von dem ermittelten Ergebnis der Klassifikation der wenigstens einen Endkonfiguration, und ausgegeben. Ferner ist das trainierte neuronale Netz dazu ausgebildet, die vollständige bildliche Erfassung einer Endkonfiguration zu ermitteln, wobei das trainierte neuronale Netz auf das erfasste Bild angewendet wird, wobei im Falle der ermittelten unvollständigen Erfassung wenigstens einer Endkonfiguration ein Steuersignal erzeugt und ausgegeben wird, welches die Mitteilung eines Bilderfassungsfehlers veranlasst.

Mittels des vorliegenden Verfahrens wird eine robuste und schnelle Lösung bereitgestellt, mittels der angelernte Endkonfigurationen eines Kabelteilstücks erkannt und/oder klassifiziert werden können. Insbesondere kann die Bestimmung des wenigstens einen interessierenden Bereichs und der Klassifikation in Echtzeit erfolgen, d.h. ohne Verzögerung in der Fertigung.

Es hat sich gezeigt, dass die Verwendung desselben neuronalen Netzes für die Ermittlung des wenigstens einen interessierenden Bereichs und der nachfolgenden Klassifikation des ermittelten interessierenden Bereichs und der zugehörigen Ergebnisermittlung als besonders robust gegenüber variablen Umwelteinflüssen und Varianzen, insbesondere bei der Bilderfassung, herausgestellt hat und damit eine hohe Zuverlässigkeit aufweist.

Ferner kann ein derartig trainiertes neuronales Netz mit weniger Schichten aufgebaut werden, was einerseits dazu führt, dass die Ansprechzeiten für eine etwaige Steuerung eines Prozesses der Kabelverarbeitungsvorrichtung geringer sind und damit ein Steuereingriff schneller erfolgen kann. Ferner ist der Aufwand zum Anlernen des Netzes reduziert. Vorteilhafterweise ist das trainierte neuronale Netz als tiefes neuronales Netz, auch als deep Neural Network bezeichnet, insbesondere als faltendes tiefes neuronales Netz, auch als deep Convolutional Neural Network bezeichnet, ausgebildet.

Die vollständige bildliche Erfassung einer Endkonfiguration betrifft in der Regel nicht einen Fehler im Fertigungsprozess, sondern einen Fehler im Bilderfassungsprozess. Dies bedeutet nicht, dass verarbeitete Kabelteilstücke, die nicht richtig erfasst wurden, fehlerbehaftet sind. Es bedeutet lediglich, dass ein interessierender Bereich und/oder eine Klassifikation aufgrund der unvollständigen Erfassung einer bestimmten Endkonfiguration, für diese Endkonfiguration nicht mit dem erfassten Bild erfolgen kann. Es bedarf im Fehlerfall somit einer Überprüfung, ob die Bilderfassungseinrichtung neu zu justieren ist oder aus anderen Gründen eine Endkonfiguration nicht vollständig erfasst wurde, z.B. defekte Führung von Kabeln. Es handelt es sich bei dem trainierten neuronalen Netz zur Ermittlung der Vollständigkeit einer Endkonfiguration um dasselbe neuronale Netz, welches auch dazu ausgebildet ist, den wenigstens einen interessierenden Bereich und die Klassifikation des wenigstens einen interessierenden Bereichs durchzuführen.

Die vorliegende Erfindung sieht daher vor, ein besonders ausgebildetes künstliches neuronales Netz zu verwenden und die Erkennung von Fehlerbildern mit Hilfe des entsprechend trainierten neuronalen Netzes durchzuführen.

Das neuronale Netz wird mittels entsprechender Trainingsdatensätze trainiert und anspruchsgemäß ausgebildet. Im Rahmen eines solchen Trainings können dem trainierbaren neuronalen Netz entsprechende Trainingsdaten präsentiert werden, welche vorab bereits in positive Trainingsbeispiele, z.B. Endkonfigurationen aufweisend wenigstens einen fehlerfreien interessierenden Bereich, und negative Trainingsbeispiele, z.B. Endkonfigurationen umfassend wenigstens einen fehlerbehafteten interessierenden Bereich, unterteilt wurden. Ferner umfassen die Trainingsdaten auch ein entsprechendes Ergebnis der Klassifikation. Ein solcher Trainingsdatensatz kann z.B. händisch erstellt werden oder aus den Ergebnissen eines herkömmlichen Bilderverarbeitungssystems in Kombination mit entsprechender Fertigungsinformation. Die Bilder sind einfach erhältlich, da routinemäßig die Kabelfertigung überwacht werden kann und die Daten einige Zeit gespeichert werden. Ferner erfolgt auch heute eine v.a. vom Personal erfolgte Überwachung der Kabelfertigung auf Fehler und Fehlerart.

Im Folgenden wird eine mögliche Ausführungsform für die Erstellung eines Trainingsdatensatzes und das Training des neuronalen Netzes beschrieben. Es versteht sich, dass die beschriebene Erstellung und das Training auch unabhängig von einer Kabelverarbeitungsvorrichtung erfolgen können. Die vorliegende Offenbarung offenbart daher explizit eine solche Erstellung und ein entsprechendes Training als separate
Gegenstände.

Für das Training des neuronalen Netzes wird ein entsprechender Satz an Trainingsbildern erzeugt. Die Bilder zeigen wenigstens einen interessierenden Bereich einer Endkonfiguration und ein zugehöriges Klassifikationsergebnis, bspw. "in Ordnung" oder "nicht in Ordnung". Es erfolgt eine entsprechende Qualifizierung der von Trainingsbilddatensätzen nach gezeigtem interessierendem Bereich und Klassifikationsergebnis, wobei nicht nur das Kriterium fehlerbehaftet vs. fehlerfrei vorgesehen werden kann, sondern es kann bspw. auch das konkrete Fehlerbild für das jeweilige Bild annotiert werden.

Die Erfassung entsprechender Bilder und deren Qualifizierung kann im normalen Fertigungsbetrieb der Kabelverarbeitungsvorrichtung erfolgen, so dass eine Vielzahl von Bildern mit unterschiedlicher Größe, Blickrichtung, Drehung, Kontrast, Beleuchtung, Verdeckung, usw. erzeugt werden können und der in der Regel offline ermittelte interessierende Bereich und dessen Klassifikation bzw. das Klassifikationsergebnis ergänzt werden kann. Diese Qualifizierung der Bilder kann per Hand erfolgen oder zumindest teilweise von einem herkömmlichen Bildverarbeitungssystem durchgeführt werden, wobei eine händische Nacharbeit möglich ist. Die vorab qualifizierten Trainingsbilder werden im Anschluss für das Training entsprechend vorverarbeitet.

Beispielsweise kann die Größe der Trainingsbilder auf eine vorgegebene Größe angepasst werden. Insbesondere kann die Anzahl der Pixel der Trainingsbilder der Anzahl der Eingänge einer Eingangsschicht des neuronalen Netztes angepasst werden. Auch kann die Vorverarbeitung der Trainingsbilder das Normalisieren der Bilder aufweisen. Beispielsweise können die Bilder als RGB-Bilder vorliegen, wie sie von einer Bildaufnahmeeinrichtung übermittelt werden. D.h. vorzugsweise werden eine Aufbereitung und Vorverarbeitung der Bilder vermieden, so dass das trainierte neuronale Netz mit entsprechenden Rohdaten umgehen kann, was die spätere Geschwindigkeit der Bildauswertung erhöht.

Um die Ergebnisse des neuronalen Netzes zu verbessern und robuster zu gestalten, können die Trainingsbilder zufälligen Bildmanipulationen unterzogen werden. Solche Bildmanipulationen können z.B. ein Rotieren, ein Vergrößern, ein Verkleinern und/oder ein Verzerren aufweisen. Es versteht sich, dass entsprechende Größenordnungen für die jeweilige Bildmanipulation vorgegeben werden können.

Beispielsweise kann für das Vergrößern oder Verkleinern eine maximale Vergrößerung bzw. Verkleinerung in Prozent angegeben werden, z.B. 110% oder 90%. Für die Rotation kann z.B. ein maximaler oder minimaler Rotationswinkel, z.B. +/- 10°, 20° oder 30°, angegeben werden. Ebenso können für das Verzerren entsprechende Grenzwerte vorgegeben werden. Es versteht sich, dass unterschiedliche Algorithmen für die Bildverzerrung genutzt werden können, welche unterschiedliche Parameter aufweisen können.

Die Bildmanipulationen dienen dazu, die Trainingsdaten mit einer größeren Variabilität zu versehen. Die Endkonfiguration bzw. die Mehrzahl an Endkonfigurationen wird folglich an unterschiedlichen Stellen und in unterschiedlicher Größe im Bild vorhanden sein. Damit wird z.B. verhindert, dass das neuronale Netz lernt, das vorgegebene Merkmal nur in einem kleinen Ausschnitt eines Bildes zu identifizieren, und fälschlicherweise den Schluss zieht, das Merkmal sei nicht vorhanden, obwohl es z.B. lediglich außerhalb des Ausschnitts liegt.

Nach der Vorverarbeitung der Trainingsbilder wird das neuronale Netz mit einem Teil der so erhaltenen Trainingsbilder trainiert. Die verbleibenden Trainingsbilder können zur Überprüfung der Lernerfolge genutzt werden, indem sie dem trainierten neuronalen Netz zugeführt werden und dessen Ausgabe mit der für das jeweilige Trainingsbild gekannten bzw. erwarteten Ausgabe verglichen wird. Dieser Teil der Trainingsbilder kann daher auch als Testdaten bezeichnet werden.

Nach Abschluss des Trainings kann die Qualität des Trainings, wie oben bereits erwähnt, mittels einer Qualifikation der Testdaten durch das trainierte neuronale Netz überprüft werden. Erreichen die Ergebnisse die gewünschte Qualität, kann das Training beendet werden. Sollten die Ergebnisse die gewünschte Qualität noch nicht erreicht haben, oder soll das neuronale Netzwerk weitergebildet werden, kann das Training mit entsprechenden Trainingsdaten fortgesetzt oder mit veränderten Parametern erneut durchgeführt werden.

Die wenigstens eine Endkonfiguration wird mittels wenigstens einem Bild einer Bildaufnahmeeinrichtung erfasst. Vorzugsweise wird das wenigstens eine Bild digital erfasst, bspw. mittels einer CCD-Kamera zur Erzeugung von Bildern in einem für das menschliche Auge sichtbaren Spektralbereich. Die Bildaufnahmeeinrichtung ist dazu derart positioniert und ausgerichtet, dass typischerweise die wenigstens eine Endkonfiguration im Aufnahmebereich der Bildaufnahmeeinrichtung angeordnet ist. Ggf. kann auch eine Mehrzahl an Bildern bzw. auch eine Mehrzahl an Bildaufnahmeeinrichtungen vorgesehen werden, welche die wenigstens eine Endkonfiguration zuverlässig erfassen. Vorteilhafter kann es sein, den Aufnahmebereich zu vergrößern und die Auflösung der Bildaufnahmeeinrichtung entsprechend anzupassen.

Es versteht sich, dass das Training je nach Typ des genutzten neuronalen Netzes unterschiedlich ausgeführt werden kann. Grundsätzlich werden bei jeder Art von Training die Gewichte des neuronalen Netzes bei jedem Trainingsdurchlauf angepasst, so dass der Fehler der Ausgabe des neuronalen Netzes gegenüber dem bekannten Ergebnis aus dem Trainingsdatensatz minimiert wird. Dies wird üblicherweise durch eine sog. Back-Propagation, Fehlerrückführung oder Rückpropagierung erreicht.

Für das Training kann ferner eine sog. Epochenanzahl und ein Abbruchkriterium angegeben werden. Die Epochenanzahl gibt die Anzahl der Trainingsdurchläufe an. Dabei kann für jeden Trainingsdurchlauf eine vorgegebene Anzahl der Trainingsdaten, z.B. alle Trainingsdaten oder nur eine Auswahl der Trainingsdaten, genutzt werden. Das Abbruchkriterium gibt an, wie weit das Ergebnis des trainierbaren neuronalen Netzes vom idealen Ergebnis abweichen darf, um das Training als erfolgreich abgeschlossen ansehen zu können, und damit das neuronale Netz als ausreichend gut trainiert.

Insbesondere kann das neuronale Netzwerk als deep Convolutional Neural Network, nachfolgend auch dCNN abgekürzt, ausgestaltet sein. Insbesondere zur Klassifikation von Objekten in Bilddaten liefern CNNs und dCNNs sehr gute Ergebnisse. Es versteht sich, dass auch andere geeignete neuronale Netze aus dem Bereich des maschinellen Lernens möglich sind.

Ein derartiges dCNN kann eine Eingangsschicht sowie eine Vielzahl von versteckten Schichten und eine Ausgangsschicht aufweisen. Die versteckten Schichten können dabei zumindest teilweise identische oder sich wiederholende Schichten aufweisen.

Die Eingangsschicht kann einen Eingang für jeden Pixel der aufgenommenen Bilder aufweisen. Es versteht sich, dass die Bilder z.B. als Array oder Vektor mit der entsprechenden Anzahl an Elementen an die Eingangsschicht übermittelt werden können. Ferner kann die Größe der erfassten Bilder für alle Bilder gleich sein kann. Beispielsweise können die Bilder mit 1024*1024 Pixeln aufgenommen werden, welche einen Aufnahmebereich von 25cm mal 25 cm für entsprechende Endkonfigurationen wiedergeben. Es versteht sich, dass diese Angaben lediglich beispielhaft sind und andere Bildparameter verwendet werden können.

Nachfolgend wird ein schematischer Schichtaufbau des neuronalen Netzes erläutert. Mittels der ersten Schicht des trainierten neuronalen Netzes werden die zu analysierenden Bilddaten der Eingangsschicht des neuronalen Netzes zugeführt.

### Schicht 1: Input Tensor

Die verdeckten Schichten können eine Art Aufbereitung der eingegebenen Daten zur Weiterverarbeitung durch das neuronale Netz vornehmen und diese dann in einer Vielzahl von identischen Blöcken weiterverarbeiten. Diese Schichten können z.B. Schichten zum Auffüllen mit Nullen, sog. Zero Padding Schichten, Schichten für eine Faltung, Schichten für eine Normalisierung, und Schichten zur Aktivierung, insbesondere mittels einer sog. ReLU Funktion, auch rectified linear unit genannt, sein.

Ein beispielhafter Schichtaufbau solcher Schichten zur Aufbereitung der Daten kann wie folgt lauten:
Schicht 2: Transpose (Transponierung des input Tensors zur Weiterverarbeitung)
Schicht 3: Sub (Subtraktionsoperation für transponierten Tensor)
Schicht 4: Faltung (Faltungsoperation)
Schicht 5: Aktivierung (Aktivierungsfunktion - ReLU)
Schicht 6: MaxPooling (Selektion von Maximalwerten)

Es kann sich ein weiterer beispielhafter Block zur weiteren Analyse der aufbereiteten Daten anschließen:
Schicht 7: Faltung (Faltungsoperation)
Schicht 8: Aktivierung (Aktivierungsfunktion - ReLU)
Schicht 9: Faltung (Faltungsoperation)
Schicht 10: Aktivierung (Aktivierungsfunktion - ReLU)
Schicht 11: Faltung (Faltungsoperation)
Schicht 12: Addition (Additionsoperator)

Hierbei können Daten aus Schicht 6 auch parallel mit nur einer Faltungsoperation verarbeiten werden, wobei diese dann mit dem Ergebnis der Schicht 11 in Schicht 12 addiert werden. Es versteht sich, dass abweichende Schichtanordnungen möglich sind und obiger Aufbau lediglich beispielhaft gezeigt wird.

An diese Schichten können sich ferner Blöcke anschließen, die jeweils einen identischen Aufbau wie der vorher gezeigte Block aufweisen können.

Mittels der Ausgabeschicht bzw. Ausgabelayer des neuronalen Netzes können dann entsprechende Informationen zum interessierenden Bereich und der Klassifikation ausgegeben werden, bspw. Anzahl der ermittelten interessierenden Bereiche, Art der ermittelten interessierenden Bereiche (z.B. Crimphülse, Tülle, Innenkontakt, usw.), Fehlerstatus, wie etwa fehlerbehaftet oder fehlerfrei, eine entsprechende Wahrscheinlichkeit für das Vorliegen des ermittelten Fehlerstatus und Identifikation eines bestimmten Fehlerbilds.

Im Ergebnis lässt sich so beispielhaft ein neuronales Netz mit bspw. 274 Schichten bereitstellen, welches durch Training mittels entsprechender Trainingsdaten dazu ausgebildet ist, die Bildauswertung in erfindungsgemäßer Weise durchzuführen.

Die Endkonfigurationen können verschieden ausgestaltet sein. Typischerweise ist die Endkonfiguration eines Kabelteilstücks charakterisiert durch den vorhergehenden Verarbeitungsschritt, welcher zwischen der Anfangskonfiguration und der Endkonfiguration erfolgt. Insbesondere kann das Kabelteilstück ein Kabelende sein.

Jedoch ist es möglich, dass auch das gesamte Kabel als Endkonfiguration angesehen wird, insbesondere, wenn unterschiedliche Teile des Kabels in unterschiedlichen Kabelverarbeitungseinheiten prozessiert werden und verschiedene Kabelteilstücke desselben Kabels mit unterschiedlichen Bildaufnahmeeinrichtungen erfasst werden. Die Endkonfiguration des Kabels wird stets dann geändert, wenn ein Kabelteilstück dieses Kabels weiterverarbeitet wird.

Die Endkonfiguration kann neben dem Kabelteilstück noch wenigstens ein weiteres Element umfassen, bspw. aus der Gruppe Crimphülse, Kontaktpin, Stecker, Innenleiter, Außenleiter, Schirmgeflecht, Verbindungsrohr, Kabel, Kabelmantel, Isolator, Tülle, Laserkennzeichnung des Kabels als alphanummerische Zeichenkette, Kupplung, Halterung für Tüllen, Kabelhalter, Separator, Gehäuse, Schmutzklappe, Ferrule für optische Leiter, Etikett, Silikon-Isolierschlauch, usw., die in dem Verarbeitungsschritt der Verarbeitungseinheit zusammen mit dem Kabelteilstück verarbeitet werden. Die Endkonfiguration kann auch nur Elemente des Kabels umfassen, z.B. ein abisoliertes Ende mit angrenzendem nicht abisoliertem Teil im Rahmen eines Verarbeitungsschritts der teilweisen Abisolierung. Die Endkonfiguration kann auch nur am Kabel angeordnete Bauelemente erfassen, nicht aber das Kabel selbst, bspw. die Kombination Gehäuse und Gehäuseschmutzklappe.

Da wenigstens ein Kabelteilstück, insbesondere ein Kabelende, in der Kabelverarbeitungseinheit verarbeitet wird, und eine Endkonfiguration stets dem verarbeiteten Kabelteilstück zugeordnet ist, können bei der gleichzeigen Verarbeitung einer Mehrzahl an Kabelteilstücken durch die Kabelverarbeitungseinheit auch eine entsprechende Mehrzahl an Endkonfigurationen vorliegen. In diesem Sinne folgt aus dem Vorliegen wenigstens eines Kabelteilstücks, das Vorliegen wenigstens einer Endkonfiguration.

In der Regel sind die Mehrzahl der Endkonfiguration der Kabelteilstücke, welche gleichzeitig durch dieselbe Kabelverarbeitungseinheit verarbeitet werden, gleichartig; z.B. alle Kabelteilstücke, z.B. Kabelenden, werden jeweils mit einer Crimphülse bestückt und gecrimpt. D.h. die Endkonfiguration, hier die auf das Kabelteilstück gecrimpte Crimphülse, unterscheidet sich für die Mehrzahl an Kabelteilstücken i.d.R. nur dadurch, ob für die jeweilige Endkonfiguration des jeweiligen Kabelteilstücks ein Fehlerbild vorliegt oder nicht, z.B. fehlerhaft gecrimpt wurde oder nicht.

Als interessierender Bereich der Endkonfiguration des wenigstens einen Kabelteilstücks wird mittels des trainierten neuronalen Netzes derjenige Bildbereich ermittelt, welcher gemäß der Trainingsdaten als interessierender Bereich angelernt wurde, sofern dieser im erfassten Bild vorhanden ist. Als interessierender Bereich der Endkonfiguration können insbesondere gewählt sein aus der Gruppe: Crimphülse, Kontaktpin, Stecker, Innenleiter, Außenleiter, Schirmgeflecht, Verbindungsrohr, Kabel, Kabelmantel, Isolator, Tülle, Laserkennzeichnung des Kabels als alphanummerische Zeichenkette, Kupplung, Halterung für Tüllen, Kabelhalter, Separator, Gehäuse, Schmutzklappe, Ferrule für optische Leiter, Etikett, Silikon-Isolierschlauch, usw. Ist eine Mehrzahl an Endkonfigurationen vorhanden, da eine Mehrzahl an Kabelteilstücken mittels der Kabelverarbeitungseinheit verarbeitet werden, wird dementsprechend eine Mehrzahl an interessierenden Bereichen bestimmt, wobei für jede Endkonfiguration nur ein interessierender Bereich oder eine Mehrzahl an interessierenden Bereichen ermittelt werden kann.

Häufig genügt es, nur einen interessierenden Bereich pro Endkonfiguration zu ermitteln und diesen mittels des trainierten neuronalen Netzes zu klassifizieren. In diesem Fall erfolgt eine isolierte Klassifikation des ermittelten interessierenden Bereichs. Es können jedoch auch mehrere interessierende Bereiche für eine jeweilige Endkonfiguration bestimmt werden. Dies ist insbesondere von Interesse für unterschiedliche Bauelemente, was das Kabelteilstück einschließen kann, und umfassende Endkonfigurationen.

Als Ergebnis der Klassifikation kann bspw. in einem ersten Schritt ermittelt werden, ob eine Endkonfiguration fehlerbehaftet ist oder fehlerfrei, bspw. kann als Ergebnis ausgegeben werden "in Ordnung" oder "i.O." für eine Endkonfiguration, welche als fehlerfrei ermittelt wurde bzw. "nicht in Ordnung" oder "nicht i.O." für eine Endkonfiguration, welche als fehlerbehaftet ermittelt wurde. Insbesondere kann das Ergebnis mittels Farbcodes kommuniziert werden, bspw. grüne Kennzeichnung eines interessierenden Bereichs als fehlerfrei und rote Kennzeichnung eines interessierenden Bereichs als fehlerbehaftet. In einem zweiten Schritt, bspw. auf Anforderung eines Benutzers oder einer Steuereinrichtung, kann für fehlerbehaftete Endkonfigurationen das konkrete Fehlerbild aus einer Vielzahl der möglichen Fehlerbilder identifiziert werden. Es kann auch stets die vollständige Information des Ausgangsvektors des neuronalen Netzes standardmäßig, insbesondere für eine Steuereinrichtung, verfügbar gemacht werden.

In einer weiteren Ausführungsform des Verfahrens wird mittels der Bilderfassungseinrichtung ein Bild erfasst, welches zwei bis 100 Endkonfigurationen zeigt, wobei das trainierte neuronale Netz dazu ausgebildet ist, jeweils wenigstens einen interessierenden Bereich für die zwei bis 100 Endkonfigurationen, insbesondere für jede der zwei bis 100 Endkonfigurationen, zu ermitteln und wenigstens ein der Klassifikation der interessierenden Bereiche zugeordnetes Ergebnis zu ermitteln, und das trainierte neuronale Netz auf das erfasste Bild angewendet wird, wobei ein Steuersignal für die zwei bis 100 erfassten Endkonfigurationen, insbesondere für jede der zwei bis 100 erfassten Endkonfigurationen, auf Grundlage des ermittelten wenigstens einen interessierenden Bereichs und/oder des der Klassifikation zugeordneten Ergebnisses für die jeweilige Endkonfiguration erzeugt und ausgegeben wird.

Mittels einer derartigen Ausgestaltung wird es ermöglicht, den Durchsatz einer Kabelverarbeitungseinheit durch parallelisierte Verarbeitung signifikant zu erhöhen, ohne dabei die Gefahr einzugehen, dass eine effiziente und zuverlässige Fehlerbildkontrolle durch einen menschlichen Überwacher nicht mehr möglich ist. Vielmehr wird durch die Verwendung eines entsprechend ausgestalteten neuronalen Netzes eine zuverlässige Fehlerbildkontrolle in Echtzeit für eine Vielzahl parallel verarbeiteter Kabelteilstücke bzw. Endkonfigurationen erst ermöglicht und damit der Fertigungsprozess deutlich verbessert. Indem ein entsprechendes Steuersignal erzeugt und ausgegeben wird, kann abhängig vom Klassifikationsergebnis das entsprechende Kabel bzw. Kabelteilstück weiterverarbeitet werden, bspw. gezielt aus der weiteren parallelisierten Verarbeitung ausgesondert werden.

Vorzugsweise zeigt das erfasste Bild wenigstens 10 bis 100, insbesondere 20 bis 100, insbesondere 30 bis 100, insbesondere 40 bis 100 Endkonfigurationen. Für jede gezeigte Endkonfiguration wird wenigstens ein interessierender Bereich mittels des hierfür trainierten neuronalen Netzes bestimmt.

In einer weiteren Fortbildung der vorgenannten Ausführungsform ist das trainierte neuronale Netz dazu ausgebildet, für eine Maximalanzahl von Endkonfigurationen jeweils mindestens einen interessierenden Bereich mit einem zugehörigen Wahrscheinlichkeitswert zu ermitteln, wobei das neuronale Netz ferner dazu ausgebildet ist, für eine Differenz der Anzahl der erfassten Endkonfigurationen und der Maximalanzahl einen Wahrscheinlichkeitswert unterhalb eines vorgegebenen Schwellwerts zu ermitteln, wobei das neuronale Netz ferner dazu ausgebildet ist, dass interessierende Bereiche mit einem Wahrscheinlichkeitswert unterhalb des vorgegebenen Schwellwerts nicht klassifiziert werden. Damit kann das neuronale Netz flexibel für eine variable Anzahl an parallel verarbeiteten Kabeln eingesetzt werden. Ferner wird keine Klassifikation für interessierende Bereiche vorgenommen, deren Wahrscheinlichkeitswert einen Schwellwert nicht überschreitet, da nicht im erfassten Bild vorhanden, was die Geschwindigkeit des neuronalen Netzes erhöht und Rechenressourcen schont.

In einer weiteren Ausführungsform des Verfahrens ist das trainierte neuronale Netz dazu ausgebildet, für wenigstens eine Endkonfiguration wenigstens einen ersten interessierenden Bereich und für die gleiche Endkonfiguration wenigstens einen zweiten, vom ersten interessierenden Bereich räumlich abweichenden interessierenden Bereich aus dem wenigstens einen erfassten Bild zu ermitteln und das trainierte neuronale Netz ferner dazu ausgebildet, für die Klassifikation zusätzlich einen Relativparameter des wenigstens ersten interessierenden Bereichs und des zweiten interessierenden Bereichs zu berücksichtigen und ein der Klassifikation zugeordnetes Ergebnis zu ermitteln und wobei das trainierte neuronale Netz auf das wenigstens eine Bild angewendet wird, wobei ein Steuersignal für die wenigstens eine Endkonfiguration anhand des Ergebnisses der die Relativlage berücksichtigenden Klassifikation erzeugt und ausgegeben wird.

Es kann somit für eine Endkonfiguration eine Mehrzahl an verschiedenen interessierenden Bereichen, insbesondere zwei, drei oder vier interessierende Bereiche, ermittelt werden. Ferner kann eine Mehrzahl an verschiedenen interessierenden Bereichen für eine Mehrzahl an Endkonfigurationen, insbesondere 2 bis 100, ermittelt werden. Darüber hinaus erlaubt es eine relationale Beziehung zwischen unterschiedlichen Kabelteilstücken desselben Kabels, hier die Endkonfiguration, neben den Endkonfigurationen der Kabelteilstücke, über unterschiedliche Kabelverarbeitungseinheiten hinweg zu berücksichtigen.

Bei dieser Ausführungsvariante erfolgt die Klassifikation nicht mehr nur isoliert für den ermittelten interessierenden Bereich, sondern für die Klassifikation der Endkonfiguration wird auch ein Relativparameter der wenigstens zwei ermittelten interessierenden Bereiche der gleichen Endkonfiguration berücksichtigt. Als Relativparameter kann bspw. die Relativlage vorgesehen sein. Relativlage ist in diesem Zusammenhang breit zu verstehen, so kann bspw. eine relative Orientierung, eine Relativverschiebung oder Relativdrehung oder auch ein Abstand des wenigstens ersten und wenigstens zweiten interessierenden Bereichs umfasst sein.

Mittels der Einbeziehung der Relativlage des wenigstens ersten und des wenigstens zweiten interessierenden Bereichs in die Klassifikation kann Aufschluss darüber gewonnen werden, ob verschiedene von einer Endkonfiguration erfasste Bauelemente fehlerfrei zueinander angeordnet sind. Bspw. kann als erster interessierender Bereich eine Crimphülse erkannt werden, und als zweiter interessierender Bereich ein abgemanteltes Kabelende, wobei dann der Abstand zwischen dem ersten interessierenden Bereich und dem zweiten Bereich bewertet wird. Daraus lässt sich ermitteln, ob die Crimphülse fehlerfrei auf dem abgemantelten Kabelende positioniert ist, insbesondere ob die Crimphülse das abgemantelte Kabelende zu weit überdeckt oder aber zu weit vom abgemantelten Bereich entfernt angeordnet ist. Ferner kann auch die Längsrichtung der Crimphülse und die Längsrichtung des abgemantelten Kabelendes berücksichtigt werden, um einen Schiefstand der Crimphülse relativ zum Kabelende zu ermitteln.

Ferner kann als Relativparameter eine funktionelle Zugehörigkeit des ersten und des zweiten interessierenden Bereichs zu einer bestimmten Bauelementklasse berücksichtigt werden. So kann bspw. ermittelt werden, ob an einem Ende eines annähernd fertig bearbeiteten Kabels eine Tülle, der erste interessierende Bereich, angeordnet ist und an dem anderen noch in der Verarbeitung befindlichen Ende, der zweite interessierende Bereich, eine Crimphülse passend vorgesehen ist.

Das neuronale Netz ist in diesem Fall so mittels Training ausgebildet, dass ein ermittelter interessierender Bereich mit einem bestimmten Bauelement assoziiert ist, dass z.B. ein erster interessierender Bereich eine Tülle ist, und ein zweiter interessierender Bereich eine Crimphülse, wobei dann als Relativparameter für die Klassifikation ein Vergleich der Anzahl an Tüllen und Crimphülsen für das selbe Kabel berücksichtigt wird. Ferner kann das neuronale Netz dazu ausgebildet sein, zu bestimmen, ob zu jedem ermittelten interessierenden Bereich in Form einer Crimphülse genau ein interessierender Bereich in Form einer Tülle entlang des Kabels vorliegt. Es versteht sich, dass dies lediglich beispielhaft ist und die Klassifikation, welche einen Relativparameter berücksichtigt, auch für andere Bauelemente vorgesehen werden kann.

Diese Ausführungsform erlaubt es, komplexe mittels verschiedener Bauelemente zusammengesetzte Endkonfigurationen in Echtzeit zu klassifizieren und damit den Fertigungsprozess zuverlässig zu handhaben. Insbesondere kann diese Form der Klassifikation für ein 2 bis 100 Endkonfigurationen umfassendes Bild angewendet werden, so dass komplexe Verarbeitungsprozesse bei hohem Durchsatz auf Fehler überwacht werden können.

In einer weiteren Ausgestaltung erfolgt die Erfassung des Bildes der wenigstens einen Endkonfiguration mittels einer digitalen Bildaufnahmeeinrichtung derart, dass wenigstens ein interessierender Bereich durch mindestens 20 Pixel, vorzugsweise mehr als 50 Pixel, wiedergegeben wird. Es hat sich gezeigt, dass das trainierte neuronale Netz besonders zuverlässige Resultate liefert, wenn ein interessierender Bereich mindestens von 20 Pixeln, vorzugsweise von mehr als 50 Pixeln im erfassten Bild repräsentiert wird. Dies kann bspw. erreicht werden, wenn die Bildaufnahmeeinrichtung eine Auflösung von 1 Megapixel oder mehr aufweist und der Aufnahmebereich, in welchem die Vielzahl an Endkonfigurationen angeordnet ist, 25cm mal 25cm beträgt.

In einer weiteren Ausführungsform wird mittels des Steuersignals eine grafische Anzeige des wenigstens einen ermittelten interessierenden Bereichs in einem die wenigstens eine Endkonfiguration zeigenden Bild, insbesondere dem Bild auf welches das trainierte neuronale Netz angewendet wurde, insbesondere als farbliche Umrandung des wenigstens einen ermittelten interessierenden Bereichs, auf einer Bildausgabeeinrichtung veranlasst. Durch Ausgabe einer grafischen Anzeige auf einer Bildausgabeeinrichtung wird für das Personal ersichtlich, ob und welcher Bereich bzw. welche Bereiche im erfassten Bild als interessierender Bereich bzw. interessierende Bereiche ermittelt wurde. Damit kann eine Prüfung auf Plausibilität erfolgen. Vorzugsweise kann ein farblicher Rahmen bzw. eine farbliche Umrandung verwendet werden, um einen ermittelten interessierenden Bereich bzw. ermittelte interessierende Bereich auf dem die Endkonfiguration zeigenden Bild schnell für das Personal erfassbar zu machen.

Vorteilhaft kann der Rahmen mittels der Rahmenfarbe die Art des ermittelten interessierenden Bereichs, bspw. ein bestimmtes Kabelteilstück oder ein bestimmtes Bauelement, identifizieren.

Gemäß einer weiteren Ausführungsform wird mittels des Steuersignals eine grafische Anzeige des Ergebnisses der Klassifikation für die wenigstens eine Endkonfiguration in einem die wenigstens eine Endkonfiguration zeigenden Bild, insbesondere dem der Klassifikation zugrunde gelegten Bild, auf einer Bildausgabeeinrichtung veranlasst. Die grafische Anzeige des Ergebnisses der Klassifikation kann insbesondere als farbliche Indizierung und/oder als Textbaustein wiedergegeben werden, z.B. "in Ordnung" oder "i.O." bzw. "nicht in Ordnung" oder "nicht i.O.".

Insbesondere kann es vorteilhaft sein, wenn der Rahmen mittels der Farbe indiziert, für welchen wenigstens einen ermittelten interessierenden Bereich ein Klassifikationsergebnis vorliegt, welches einem Fehlerbild entspricht und für welchen wenigstens einen ermittelten interessierenden Bereich ein Klassifikationsergebnis vorliegt, welches einem fehlerfreien Zustand entspricht.

Auch diese grafische Ausgabe erlaubt dem Personal eine schnelle und einfache optische Erfassung, welche Endkonfiguration bzw. welche interessierenden Bereiche als fehlerbehaftet oder als fehlerfrei klassifiziert wurden.

In einer weiteren Ausführungsform wird mittels der grafischen Anzeige ein dem Ergebnis der Klassifikation zugeordnetes Fehlerbild in Form einer Fehlerbildbezeichnung wiedergegeben. Hierdurch wird für das Personal nicht nur erfassbar, ob eine Endkonfiguration fehlerbehaftet ist oder fehlerfrei im Sinne von "in Ordnung" oder "nicht in Ordnung", sondern das Personal wird auch über die Art der Fehlerbilds informiert.

In einer weiteren Ausführungsform der Erfindung wird mittels des Steuersignals der Betrieb der Kabelverarbeitungseinheit derart beeinflusst, dass die Endkonfiguration eines zeitlich nachfolgend zu verarbeitenden Kabelteilstücks mittels derselben Kabelverarbeitungseinheit einer gewünschten, insbesondere fehlerfreien, Endkonfiguration angenähert wird. In diesem Fall wird das Ergebnis der Klassifikation für einen Steuereingriff der Kabelverarbeitungseinheit verwendet, um ein entsprechendes Fehlerbild für nachfolgend hergestellte Endkonfigurationen mittels der Kabelverarbeitungseinheit möglichst zu vermeiden.

In diesem Zusammenhang kann der ermittelte interessierende Bereich und das Ergebnis der Klassifikation als Eingangsdaten für ein trainiertes neuronales Netz zur Steuerung der Kabelverarbeitungseinheit verwendet werden. Dieses trainierte neuronale Steuerungsnetz ist vorzugsweise dazu ausgebildet, auf Grundlage wenigstens eines ermittelten interessierenden Bereichs und einem zugehörigen Klassifikationsergebnis ein Steuersignal zur Beeinflussung wenigstens einer Stellgröße der Kabelverarbeitungseinheit zu erzeugen und auszugeben, welches für ein nächstes zu verarbeitendes Kabelteilstück die Wahrscheinlichkeit für das Vorliegen einer fehlerhaften Endkonfiguration nach dessen Verarbeitung verringert.

In einer weiteren Ausführungsform wird mittels des Steuersignals eine Kabelfolgeverarbeitung einer der Kabelverarbeitungseinheit prozesstechnisch nachgelagerten Kabelfolgeverarbeitungseinheit wenigstens einer klassifizierten Endkonfiguration abhängig von dem Ergebnis der Klassifikation dieser Endkonfiguration beeinflusst. Dies erlaubt eine korrigierende Verarbeitung von fehlerbehafteten Endkonfigurationen durch nachfolgende Prozesse, soweit möglich, um Fertigungsausschuss zu vermeiden.

In diesem Zusammenhang kann der ermittelte interessierende Bereich und das Ergebnis der Klassifikation als Eingangsdaten für ein trainiertes neuronales Netz zur Steuerung eines Folgeprozesses verwendet werden, d.h. eines Verarbeitungsprozesses, welcher dem Verarbeitungsschritt in dessen Zusammenhang die Endkonfiguration als fehlerhaft bestimmt wurde, nachfolgt. Dieses trainierte neuronale Steuerungsnetz ist vorzugsweise dazu ausgebildet, auf Grundlage wenigstens eines ermittelten interessierenden Bereichs und einem zugehörigen Klassifikationsergebnis ein Steuersignal zur Beeinflussung wenigstens einer Stellgröße einer Kabelfolgeverarbeitungseinheit zu erzeugen und auszugeben. Dadurch kann eine fehlerhafte Endkonfiguration individuell korrigierend verarbeitet werden, so dass Fertigungsausschuss vermieden wird.

In einer weiteren Ausführungsform wird mittels des Steuersignals eine Aussonderung eines Kabelteilstücks mit einer fehlerbildbehafteten Endkonfiguration aus einem noch zu durchlaufenden Fertigungsprozess veranlasst, wobei eine Aussonderung dann erfolgt, wenn das Ergebnis der Klassifikation für diese Endkonfiguration einem vorgegebenen Fehlerbild mit einer Wahrscheinlichkeit oberhalb eines vorgegebenen Wahrscheinlichkeitsschwellwerts entspricht und nicht mittels einer Kabelfolgeverarbeitungseinheit korrigierbar ist. Diese Alternative ist dann vorteilhaft, wenn ein Fehlerbild einer Endkonfiguration durch nachfolgende Prozesse nicht korrigiert werden kann. Dies kann für bestimmte vorgegebene Fehlerbilder der Fall sein, welche mit ausreichend hoher Sicherheit identifiziert sind. Diese nicht korrigierbaren mit hoher Sicherheit vorliegenden Fehlerbilder können abhängig vom jeweiligen Fertigungsaufbau sein, und können auch von der Anordnung der Kabelverarbeitungseinheiten in Materialdurchflussrichtung abhängen. Im Fall der Nichtkorrigierbarkeit des Fehlerbilds der Endkonfiguration ist es vorteilhaft, die fehlerhafte Endkonfiguration nicht mehr weiterzuverarbeiten und baldmöglichst aus dem Fertigungsprozess auszuschleusen bzw. auszusondern.

Die Erfindung betrifft ebenfalls eine Kabelverarbeitungsvorrichtung, aufweisend:
eine Kabelverarbeitungseinheit, welche dazu ausgebildet ist, wenigstens ein Kabelteilstück, insbesondere ein Kabelende, aufzunehmen und derart zu verarbeiten, dass das wenigstens eine Kabelteilstück von einer Anfangskonfiguration in eine Endkonfiguration überführt wird, eine Bildaufnahmeeinrichtung, angeordnet und ausgebildet zur Aufnahme zumindest eines Bilds der wenigstens einen Endkonfiguration, eine Auswerteeinrichtung und eine Steuereinrichtung zur Steuerung und/oder Regelung der Kabelverarbeitungsvorrichtung, wobei die Auswerteeinheit mit der Bildaufnahmeeinrichtung und der Steuereinrichtung wirkverbunden ist, und wobei in die Auswerteeinrichtung und/oder in die Steuereinrichtung maschinenlesbarer Programmcode ladbar ist, welcher bei dessen Ausführung die Durchführung des Verfahrens nach einem der vorhergehenden Ansprüche veranlasst. Mittels einer derartigen Kabelverarbeitungsvorrichtung kann insbesondere eine automatisierte Qualitätsprüfung des Kabelfertigungsprozesses erfolgen.

Die Kabelverarbeitungsvorrichtung umfasst somit insbesondere ein trainiertes neuronales Netz zur Auswertung des zumindest einen aufgenommenen Bilds der wenigstens einen Endkonfiguration, wobei das neuronale Netz derart trainiert ist, dass in einem ersten Schritt wenigstens ein interessierender Bereich der wenigstens einen Endkonfiguration aus dem Bild ermittelt wird und in einem zweiten Schritt eine Klassifikation des wenigstens einen ermittelten interessierenden Bereichs hinsichtlich des Vorliegens eines Fehlerbilds der Endkonfiguration erfolgt, wobei die Auswerteeinrichtung dazu ausgebildet ist, ein Steuersignal abhängig vom ermittelten interessierenden Bereich und/oder abhängig von einem ermittelten Ergebnis der Klassifikation der Endkonfiguration auszugeben.

Die Erfindung betrifft ebenfalls einen maschinenlesbaren Programmcode für eine Auswerteeinrichtung und/oder Steuereinrichtung, welcher Steuerbefehle umfasst, welche bei deren Ausführung mittels der Auswerteeinrichtung und/oder der Steuereinrichtung die Durchführung des Verfahrens nach einem der Verfahrensansprüche veranlasst.

Die Erfindung betrifft ebenfalls eine Steuer und/oder Auswerteeinrichtung mit maschinenlesbarem Programmcode, welcher Steuerbefehle umfasst, welche bei deren Ausführung mittels der Auswerteeinrichtung und/oder Steuereinrichtung die Durchführung des Verfahrens nach einem der Verfahrensansprüche veranlasst.

Vorteilhafterweise greift die Auswerteeinrichtung, insbesondere in Form eines maschinenlesbaren Programmcodes, auf ein trainiertes neuronales Netz zu, das dazu ausgebildet ist, in einem ersten Schritt wenigstens einen interessierenden Bereich der wenigstens einen Endkonfiguration aus dem wenigstens einen erfassten Bild zu ermitteln und in einem zweiten Schritt eine Klassifikation des wenigstens einen ermittelten interessierenden Bereichs hinsichtlich des Vorliegens eines angelernten Fehlerbilds der wenigstens einen Endkonfiguration durchzuführen und ein der Klassifikation zugeordnetes Ergebnis zu ermitteln, und ein Steuersignal abhängig vom wenigstens einen ermittelten interessierenden Bereich und/oder abhängig von dem ermittelten Ergebnis der Klassifikation der wenigstens einen Endkonfiguration zu erzeugen und auszugeben. Der Zugriff der Auswerteeinrichtung, insbesondere auf den das trainierte neuronale Netz implementierenden Programmcode, kann durch Zugriff auf einem lokalen Speicher erfolgen, alternativ kann der Zugriff auch durch Zugriff auf eine Cloud erfolgen, auf der das entsprechend neuronale Netz implementiert ist.

Vorteilhafterweise ist das trainierte neuronale Netz, auf welches die Auswerteeinrichtung zugreift, ferner dazu ausgebildet, jeweils wenigstens einen interessierenden Bereich für zwei bis 100 Endkonfigurationen, insbesondere für jede der zwei bis 100 Endkonfigurationen, zu ermitteln und ein der Klassifikation der interessierenden Bereiche zugeordnetes Ergebnis zu ermitteln, wobei ein Steuersignal für die zwei bis 100 erfassten Endkonfigurationen, insbesondere für jede der zwei bis 100 erfassten Endkonfigurationen, auf Grundlage des ermittelten wenigstens einen interessierenden Bereichs und/oder des der Klassifikation zugeordneten Ergebnisses für die jeweilige Endkonfiguration erzeugbar und ausgebbar ist.

Vorteilhafterweise ist das trainierte neuronale Netz, auf welches die Auswerteeinrichtung zugreift, ferner dazu ausgebildet, für wenigstens eine Endkonfiguration wenigstens einen ersten interessierenden Bereich und für dieselbe Endkonfiguration wenigstens einen zweiten, vom ersten interessierenden Bereich räumlich abweichenden interessierenden Bereich aus dem wenigstens einen erfassten Bild zu ermitteln und das neuronale Netz ferner dazu ausgebildet ist, für die Klassifikation zusätzlich einen Relativparameter, insbesondere eine Relativlage, des wenigstens ersten interessierenden Bereichs und des zweiten interessierenden Bereichs zu berücksichtigen und ein der Klassifikation zugeordnetes Ergebnis zu ermitteln, wobei ein Steuersignal für die wenigstens eine Endkonfiguration anhand des Ergebnisses der die Relativlage berücksichtigenden Klassifikation erzeugbar und ausgebbar ist.

### Kurze Figurenbeschreibung

Nachfolgend werden vorteilhafte Ausführungsbeispiele der Erfindung unter Bezugnahme auf die begleitenden Figuren erläutert. Es zeigen:
- Figur 1: eine schematische Darstellung einer Ausführungsform der Kabelverarbeitungsvorrichtung,
- Figur 2: eine andere schematische Darstellung der Ausführungsform aus Figur 1,
- Figur 3: eine schematische Darstellung der Ausführungsform der Kabelverarbeitungsvorrichtung geeignet für eine übergreifende Beeinflussung der Kabelfertigung,
- Figur 4: eine erste beispielhafte Endkonfiguration für welche eine Mehrzahl an interessierenden Bereichen und deren Klassifikation ermittelt wurde,
- Figur 5: eine zweite beispielhafte Endkonfiguration für welche eine Mehrzahl an interessierenden Bereichen und deren Klassifikation ermittelt wurde,
- Figur 6: eine dritte beispielhafte Endkonfiguration für welche eine Mehrzahl an interessierenden Bereichen und deren Klassifikation ermittelt wurde,
- Figur 7: eine vierte beispielhafte Endkonfiguration für welche eine Mehrzahl an interessierenden Bereichen und deren Klassifikation ermittelt wurde,

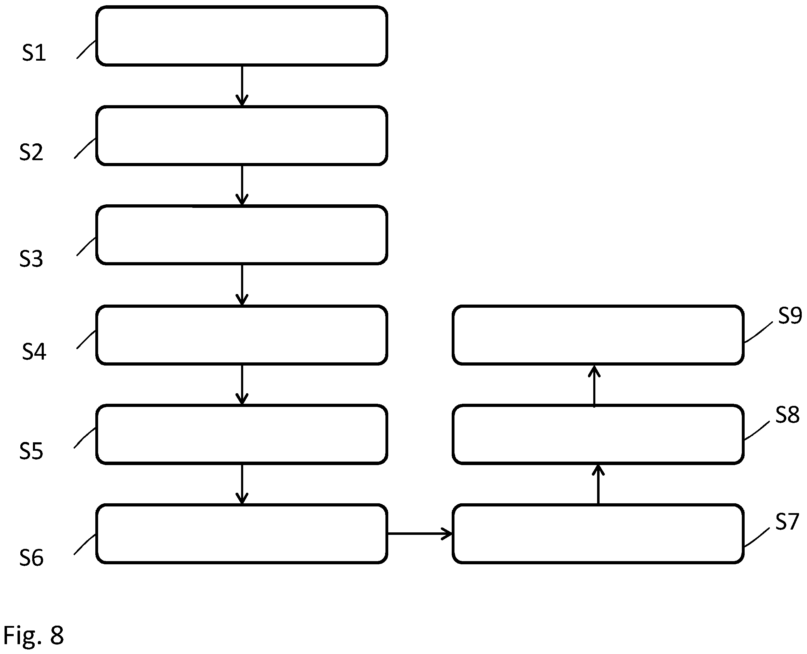

- Figur 8: ein Flussdiagramm zur schematischen Darstellung eines beispielhaften Ablaufs des Verfahrens.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

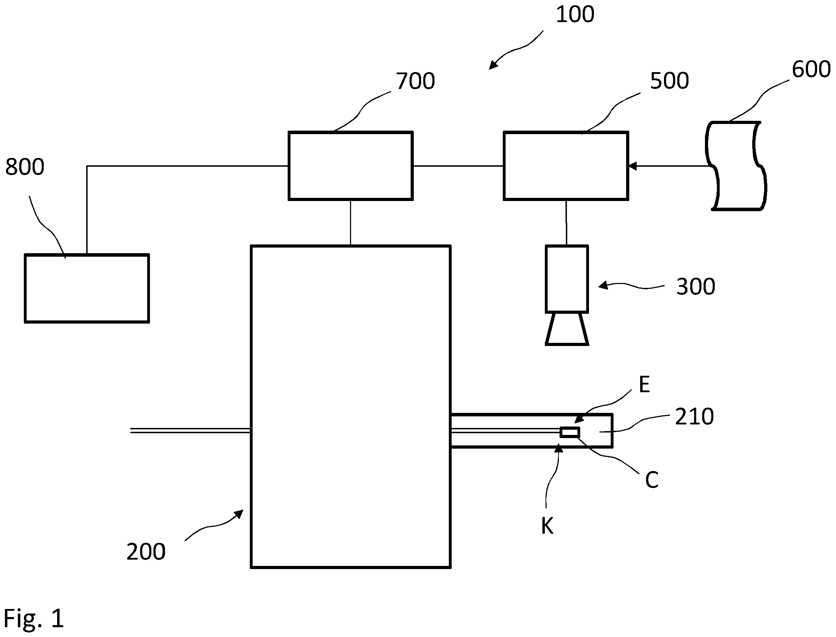

Figur 1 zeigt eine schematische Ansicht einer Kabelverarbeitungsvorrichtung 100. Die Kabelverarbeitungsvorrichtung 100 umfasst mindestens eine Kabelverarbeitungseinheit 200, mittels welcher ein Kabel bzw. ein Kabelteilstück K von einer Anfangskonfiguration in eine Endkonfiguration E verarbeitet werden. Die Anfangskonfiguration bezeichnet dabei den Zustand des zu verarbeitenden Kabelteilstücks K vor der Bearbeitung. Die Endkonfiguration bezeichnet den Zustand des verarbeiteten Kabelteilstücks K.

Es versteht sich, dass eine Mehrzahl an Kabelverarbeitungseinheiten 200 von der Kabelverarbeitungsvorrichtung 100 umfasst sein kann, die jeweils unterschiedliche Verarbeitungsschritte am Kabel, ggf. auch an unterschiedlichen Kabelteilstücken desselben Kabels, durchführen.

Die Endkonfiguration E kann abhängig vom Bearbeitungsstand des Kabels bzw. des Kabelteilstücks K sein sowie abhängig von der Art des zu fertigenden Kabels. In Figur 1 umfasst die Endkonfiguration das als Endbereich ausgebildete Kabelteilstück K des Kabels sowie eine daran angeordnete schematisch dargestellte Crimphülse C. Die Endkonfiguration kann in Durchflussrichtung nach dem Verarbeitungsschritt, ggf. auch nach Austritt aus der Kabelverarbeitungseinheit 200, bspw. auf einer Kabelaufnahmeeinrichtung 210, bildlich erfasst werden.

Diese Endkonfiguration E wird mittels einer Bildaufnahmeeinrichtung 300 erfasst. Der Aufnahmebereich der Bildaufnahmeeinrichtung 300 zur Erfassung von Endkonfigurationen E ist vorzugsweise 25cm mal 25cm. Ist eine Endkonfiguration E innerhalb des Aufnahmebereichs angeordnet, kann die Bildaufnahmeeinrichtung 300 die darin angeordneten Endkonfigurationen E im Aufnahmebereich erfassen.

Die Bildaufnahmeeinrichtung 300 ist vorzugsweise als Digitalkamera ausgebildet und weist eine Auflösung von 1024x 1024 Pixel auf. Bei dieser Konfiguration von Aufnahmebereich und Auflösung ist sichergestellt, dass das Bild ausreichend gut aufgelöst ist, um eine zuverlässige Bildauswertung durchzuführen. Eine geringere Auflösung bei gleichem Aufnahmebereich oder eine größerer Aufnahmebereich bei kleinerer Auflösung kann das Resultat der Bildauswertung nachteilig beeinflussen. E sollte sichergestellt werden, dass ein interessierender Bereich mindestens 20 Pixel, vorzugsweise 50 oder mehr Pixel, umfasst. Es können jedoch ein größerer Aufnahmebereich und eine größere Auflösung gewählt werden, was jedoch Nachteile hinsichtlich der Geschwindigkeit einer nachfolgenden Bildverarbeitung haben kann.

Ferner umfasst die Kabelverarbeitungsvorrichtung 100 eine Auswerteeinrichtung 500. Mittels der Auswerteeinrichtung 500 erfolgt eine Bildauswertung. Die Auswerteeinrichtung 500 umfasst ein trainiertes deep Convolutional Neural Network, das dazu ausgebildet, in einem ersten Schritt wenigstens einen interessierenden Bereich der wenigstens einen Endkonfiguration E aus dem wenigstens einen erfassten Bild zu ermitteln und in einem zweiten Schritt eine Klassifikation des wenigstens einen ermittelten interessierenden Bereichs hinsichtlich des Vorliegens eines angelernten Fehlerbilds der wenigstens einen Endkonfiguration E sowie ein der Klassifikation zugeordnetes Ergebnis zu ermitteln.

Hierzu wird ein maschinenlesbarer Code 600 in einen nichtflüchtigen Speicher der Auswerteeinrichtung 500 geladen, welcher das trainierte neuronale Netz umfasst. Mittels des trainierten neuronalen Netzes kann die Auswerteeinrichtung 500, indem sie das trainierte neuronale Netz auf das Bild anwendet, wenigstens einen interessierenden Bereich der Endkonfiguration E bestimmen und diesen wenigstens einen interessierenden Bereich klassifizieren.

Vorzugsweise wird für jede mittels des Bilds erfasste Endkonfiguration E wenigstens ein interessierender Bereich ermittelt. Es können auch mehrere interessierende Bereiche pro Endkonfiguration E ermittelt werden.

Auf Grundlage des Ergebnisses der Klassifikation für die ermittelten interessierenden Bereiche sendet die Auswerteeinrichtung 500 ein Steuersignal an eine von der Kabelverarbeitungsvorrichtung 100 umfasste Steuereinrichtung 700. Diese Steuereinrichtung 700 ist dazu ausgebildet die Kabelverarbeitungsvorrichtung 100 zu steuern bzw. zu regeln. Die Auswerteeinrichtung 500 kann separat zur Steuereinrichtung 700 vorgesehen werden. Die Auswerteeinrichtung 500 kann auch in der Steuereinrichtung 700 integriert sein.

Ferner ist die Steuereinrichtung 700 ebenfalls mit einer Bildausgabeeinrichtung 800 wirkverbunden. Die Steuereinrichtung 700 ist dazu ausgebildet, eine Darstellung der von der Auswerteeinrichtung 500 bereitgestellten Informationen auf der Bildausgabeeinrichtung 800 zu veranlassen. Vorzugweise erfolgt die Darstellung der ermittelten interessierenden Bereiche und der jeweiligen Klassifikationsergebnisse auf dem die analysierten Endkonfiguration E umfassenden Bild.

Dem entsprechend trainierten deep Convolutional Neural Network werden in der Eingangsschicht nicht vorverarbeitete oder anderweitig aufbereitete Rohdaten der Bildaufnahmeeinrichtung 300 zur Verfügung gestellt, bspw. in der Form 1024x1024x3. Es wird also ein Tensor bereitgestellt, der 1024x1024 Pixel aufweist, welche jeweils wiederum 3 RGB-Farben aufweisen können. Ziel ist es, dass direkt mit den erfassten Bildern ohne weitere Zwischenverarbeitung oder Aufbereitung eine Auswertung mittels der Auswerteeinrichtung 500 erfolgen kann.

Als Ausgangsdaten können vorgesehen sein bspw. die Anzahl an maximal interessierenden Bereichen auf dem Bild, zugehörige Wahrscheinlichkeitswerte für jede der interessierenden Bereiche, die Lokalisierung der interessierenden Bereiche durch Rahmen im Bild, und das Klassifikationsergebnis, welches zwischen fehlerbehaftet und fehlerfrei unterscheidet sowie ggf. noch weitere Angaben, umfassen kann z.B. die Art des Fehlerbilds, sowie einen weiteren Wahrscheinlichkeitswert für das Vorliegen eines bestimmten Fehlerbilds. Es wird somit ein Ausgangsvektor für die vorgesehene Anzahl an mittels des neuronalen Netzes bestimmbaren interessierenden Bereichen ausgegeben, mit den jeweiligen Angaben zu den jeweiligen interessierenden Bereichen.

Das genutzte deep Convolutional Neural Network ist dazu ausgebildet, für eine hohe Anzahl an Kabelteilstücken mittels desselben deep Convolutional Neural Networks zunächst wenigstens einen interessierenden Bereich pro Endkonfiguration E eines Kabelteilstücks K, vorzugsweise mehrere interessierende Bereiche pro Endkonfiguration E eines Kabelteilstücks K, zu ermitteln und anschließend die ermittelten interessierenden Bereiche zu klassifizieren. Dieses stufenweise Vorgehen erfolgt mittels desselben Netzes, welche für dieses Vorgehen trainiert wurde.

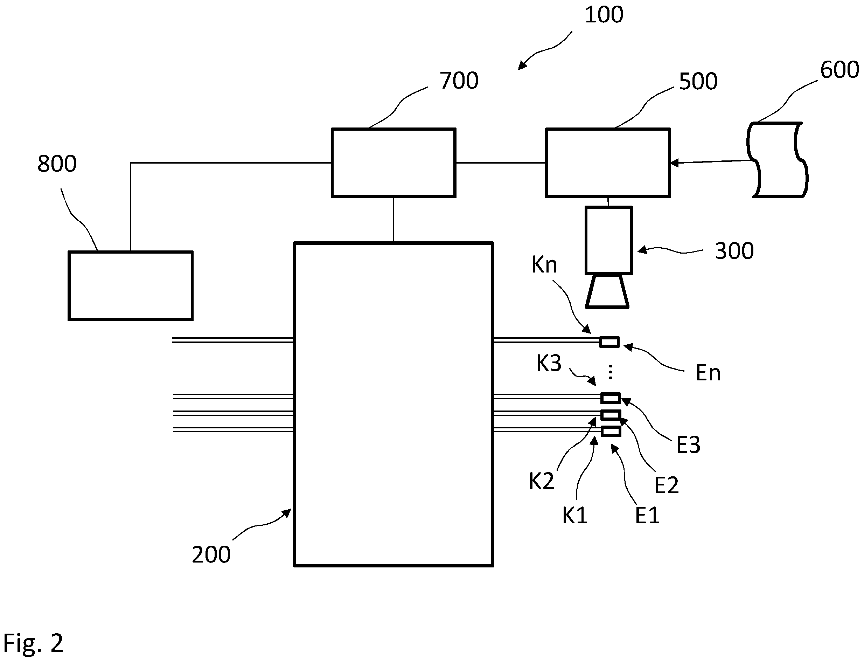

Figur 2 verdeutlich die Ausführungsform nach Figur 1 im Hinblick auf die parallele Kabelverarbeitungskapazität der Kabelverarbeitungseinheit 200. Die Kabelverarbeitungseinheit 200, als auch die Kabelverarbeitungsvorrichtung 100, ist dazu ausgebildet, eine Vielzahl von Kabeln, hier n Kabel, parallel zu verarbeiten. Vorzugsweise werden 30 bis 100 Kabel gleichzeitig von der Kabelverarbeitungseinheit 200 prozessiert und jeweils von einer Anfangskonfiguration in eine Endkonfiguration überführt.

Damit besteht die Herausforderung gleichzeitig für eine hohe Anzahl an Kabeln, z.B. 30 bis 100 Kabel, eine Echtzeitkontrolle dahingehend bereitzustellen, ob jedes einzelne Kabel fehlerfrei verarbeitet wurde. Die n Endkonfigurationen sind mit E1, E2, E3 bis En bezeichnet. Die zugehörigen Kabelteilstücke sind mit K1, K2, K3 bis Kn bezeichnet.

Es hat sich gezeigt, dass mittels der zweistufigen Vorgehensweise, gemäß der wenigstens ein interessierender Bereich für wenigstens eine Endkonfiguration bestimmt wird, und der ermittelte wenigstens eine interessierende Bereich dann klassifiziert wird, auch für eine Vielzahl von parallel verarbeiteten Kabelteilstücken besonders erfolgreich ist. Vorausgesetzt ist ein mit entsprechendem Trainingsdaten trainiertes neuronales Netz.

Vorzugsweise ist das neuronale Netz derart ausgestaltet, dass es dazu ausgebildet ist, bis zu 100 interessierende Bereiche von 100 parallel, mittels der gleiche Kabelverarbeitungseinheit 200 prozessierten Endkonfigurationen E1, E2, E3, ..., En zu bestimmen. Ferner ist es dazu ausgebildet, die 100 interessierenden Bereiche mit Wahrscheinlichkeitswerten zu versehen. Werden weniger als 100 Endkonfigurationen gleichzeitig prozessiert, so bestimmt es für die Differenz der Anzahl an erfassten Endkonfiguration zu 100 einen Wahrscheinlichkeitswert, der unterhalb eines vorgegebenen Schwellwerts liegt. Die interessierenden Bereiche mit einer Wahrscheinlichkeit unterhalb dieses Schwellwerts werden nicht weiter berücksichtigt und durch das neuronale Netz nicht klassifiziert.

Damit wird ein neuronales Netz bereitgestellt, welches geeignet ist, einen flexiblen Kabeldurchsatz durch die Kabelverarbeitungseinheit bis zu einer maximalen Kabelanzahl bzw. maximalen Anzahl an Endkonfiguration E1, E2, E3, ..., En in Echtzeit zu handhaben und den Fertigungsprozess zu prüfen. Die Maximalanzahl an mittels des neuronalen Netzes bestimmbaren interessierenden Bereiche kann derart gewählt werden, dass diese mit der maximalen parallelen Verarbeitungskapazität der Kabelverarbeitungseinheit 200 korrespondiert. Z.B. kann diese um den Faktor 2 bis 5 höher gewählt werden als die Anzahl der maximal parallel verarbeitbaren Kabel, damit pro Endkonfiguration E1, E2, E3, ..., En auch eine Mehrzahl an interessierenden Bereichen bestimmt werden kann.

Es können für die Vielzahl an Endkonfigurationen E1, E2, E3, ..., En jeweils auch mehrere interessierende Bereiche ermittelt werden, was eine relationale Klassifizierung erlaubt, welche Relativparameter von zwei oder mehr interessierenden Bereichen zueinander berücksichtigt.

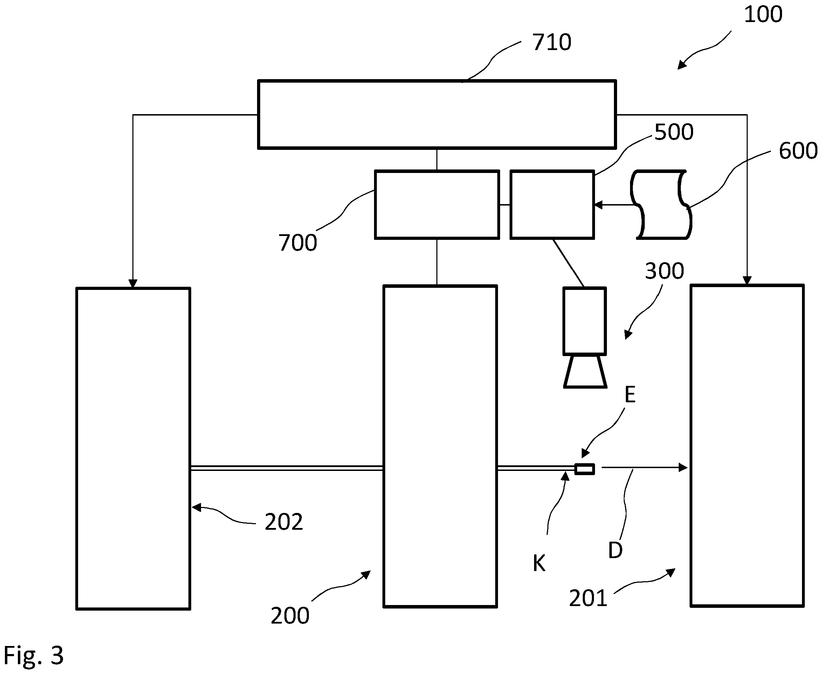

Figur 3 zeigt eine Kabelverarbeitungsvorrichtung 100. Diese umfasst die bereits aus Figur 1 und 2 gezeigte Kabelverarbeitungseinheit 200, sowie ferner eine in Durchflussrichtung der Kabelverarbeitungseinheit nachgelagerte Kabelfolgeverarbeitungseinheit 201, und eine in Durchflussrichtung der Kabelverarbeitungseinheit 200 vorgelagerte Kabelvorverarbeitungseinheit 202. Ferner umfasst die Kabelverarbeitungsvorrichtung 100 eine übergeordnete Steuereinrichtung 710, mittels welcher zumindest mittelbar die Kabelvorverarbeitungseinheit 202 und die Kabelfolgeverarbeitungseinheit 201 beeinflussbar sind. Die Durchflussrichtung bzw. Materialflussrichtung ist mit D bezeichnet.

Während die Steuereinrichtung 700 dazu ausgebildet ist, den Betrieb der Kabelverarbeitungseinheit 200 zu steuern bzw. zur regeln, ist die übergeordnete Steuereinrichtung 710 zumindest mittelbar dazu geeignet, auch den Betrieb wenigstens einer der Kabelverarbeitungseinheit 200 in Durchflussrichtung D vorgelagerten Kabelvorverarbeitungseinheit 202 zu beeinflussen. Ferner ist die übergeordnete Steuereinrichtung 710 auch zumindest mittelbar dazu geeignet, den Betrieb wenigstens einer der Kabelverarbeitungseinheit 200 in Durchflussrichtung D nachgelagerten Kabelfolgeverarbeitungseinheit 201 zu beeinflussen.

Die Kabelvorverarbeitungseinheit 202 und die Kabelfolgeverarbeitungseinheit 201 können direkt zur Kabelverarbeitungseinheit 200 vorhergehende bzw. nachgeordnete Einheiten sein. Diese können jedoch auch weiter von der Kabelverarbeitungseinheit 200 beabstandet sein.

Die wenigstens eine Kabelvorverarbeitungseinheit 202 und die wenigstens eine Kabelfolgeverarbeitungseinheit 201 können jeweils eine eigene Steuereinrichtung zur Steuerung und/oder Regelung deren Betriebs aufweisen. Eine solche ist in Figur 3 nicht gezeigt. Es versteht sich, dass nicht zwingend eine Beeinflussung einer Kabelvorverarbeitungseinrichtung 202 und einer Kabelfolgeverarbeitungseinrichtung 201 vorgesehen sein muss. Vielmehr kann auch nur eine Beeinflussung von der Kabelvorverarbeitungseinrichtung 202 oder der Kabelfolgeverarbeitungseinrichtung 201 vorgesehen sein.

Auf Grundlage des erfassten Bilds der Endkonfigurationen E mit der Bildaufnahmeeinrichtung 300 erfolgt mittels der Auswerteeinrichtung 500 eine Ermittlung wenigstens eines interessierenden Bereichs der Endkonfigurationen E und eine Klassifikation des wenigstens eines interessierenden Bereichs. Führt die Klassifikation eines interessierenden Bereichs zum Ergebnis, dass für eine bestimmte Endkonfiguration E ein Fehlerbild vorliegt und welcher Art das Fehlerbild ist, kann die Kabelverarbeitungsvorrichtung 100, bspw. in Form der Steuerung oder Regelung der Kabelfolgeverarbeitungseinrichtung 201, derart gesteuert und/oder geregelt werden, dass für die fehlerhafte Endkonfiguration E eine korrigierende Verarbeitung dieser Endkonfiguration E in einem nachfolgenden Verarbeitungsschritt mittels der Kabelfolgeverarbeitungseinheit 201 erfolgt.

Wird bspw. in der Kabelverarbeitungseinheit 200 eine Crimphülse nicht ausreichend fest auf ein abgemanteltes Kabelende verpresst, so ist die Position der Crimphülse fehlerfrei, allerdings wird diese mittels der Klassifikation auch als fehlerhaft verpresst erkannt. Dieses Fehlerbild ist reparabel. Das Fehlerbild für diese Endkonfiguration kann bspw. bei der Gehäuseaufbringung korrigiert werden, indem das die Crimphülse aufnehmende Gehäuse mit einer entsprechend erhöhten Anpresskraft auf die als reparabel fehlerhaft klassifizierte Endkonfiguration appliziert wird. Hierdurch kann die fehlerhafte Verpressung der Crimphülse abgemildert bzw. ausgeglichen werden, so dass das hergestellte Kabel auslieferungsfähig ist und die Qualitätsstandards erfüllt.

Dieses Vorgehen kann generell für alle klassifizierten interessierenden Bereiche vorgesehen werden, von welchen bekannt ist, dass diese ein reparables Fehlerbild aufweisen, welches durch nachgelagerte Verarbeitungsschritte in ausreichendem Maße korrigiert werden kann. Hierdurch wird Ausschuss vermieden, eine höhere Effizienz der Fertigung erreicht und die Kosten pro Kabel reduziert.

Ferner ist die Steuereinrichtung 700 auch dazu ausgebildet, anhand des wenigstens einen ermittelten interessierenden Bereichs und des zugehörigen Klassifikationsergebnisses für eine bestimmte Endkonfiguration E die Kabelverarbeitungseinheit 200 derart zu steuern und/oder zu regeln, dass für nachfolgende hergestellte Endkonfigurationen das ermittelte Fehlerbild reduziert oder ganz vermieden wird.

Im angeführten Beispiel mit der Crimphülse kann bspw. die Anpresskraft der Crimppresse, insbesondere nur für die Position des Kabels in der Kabelverarbeitungseinheit 200, für welche das Fehlerbild erkannt wurde, erhöht werden. Der ermittelte interessierende Bereich und die zugehörige Klassifikation können daher dazu verwendet werden, die Stellgrößen der Kabelverarbeitungseinheit 200 individuell derart anzupassen, dass ein stabiler und optimierter Verarbeitungsprozess für nachfolgende Kabelteilstücke erreicht wird.

Ferner kann die Kabelverarbeitungsvorrichtung 100 aus Figur 3 dazu ausgebildet sein, anhand des wenigstens einen ermittelten interessierenden Bereichs und des zugehörigen Klassifikationsergebnisses den Betrieb einer Kabelvorverarbeitungseinheit 202 derart zu beeinflussen, dass ein bestimmtes Fehlerbild in der Endkonfiguration E des Kabelteilstücks K, erfasst nach der Verarbeitung mit der Kabelverarbeitungseinheit 200, reduziert wird. Auch dies kann mittels der übergeordneten Steuerung 710 erfolgen.

Bspw. kann die Auswertung ergeben, dass eine Abmantelung des Kabels nicht korrekt erfolgt ist und aus diesem Grund die in der Kabelverarbeitungseinheit 200 aufgebrachte Crimphülse nicht richtig positioniert ist. In diesem Fall ist das Fehlerbild verursacht durch die Kabelvorverarbeitungseinheit 202, welche den Schritt des Abmantelns am Kabelteilstück durchführt. Folglich kann dieses Fehlerbild behoben werden, wenn der Betrieb der Kabelvorverarbeitungseinrichtung 202 in einer Weise beeinflusst wird, welche den Abmantelungsprozess wieder in Richtung eines Soll-Ergebnisses verändert.

Es versteht sich, dass dies lediglich beispielhafte Erläuterungen sind. Abhängig vom ermittelten interessierenden Bereich und dessen Klassifikation kann dies auf beliebige Endkonfigurationen des Kabelteilstücks erweitert werden. Dies gilt entsprechend für Kabelvorverarbeitungseinheit 202 und Kabelfolgeverarbeitungseinheit 201.

Durch derartiges Vorgehen wird es möglich, dass nicht nach jeder Kabelverarbeitungseinheit eine Bildaufnahmeeinrichtung zur Erfassung von Endkonfigurationen und eine Bildauswertung erfolgen muss. Vielmehr reichen wenige Bildauswertungen an wenigen Kabelverarbeitungseinheiten, anhand deren Ergebnisse eine Vielzahl an Fertigungsprozessen vorteilhaft beeinflusst werden kann.

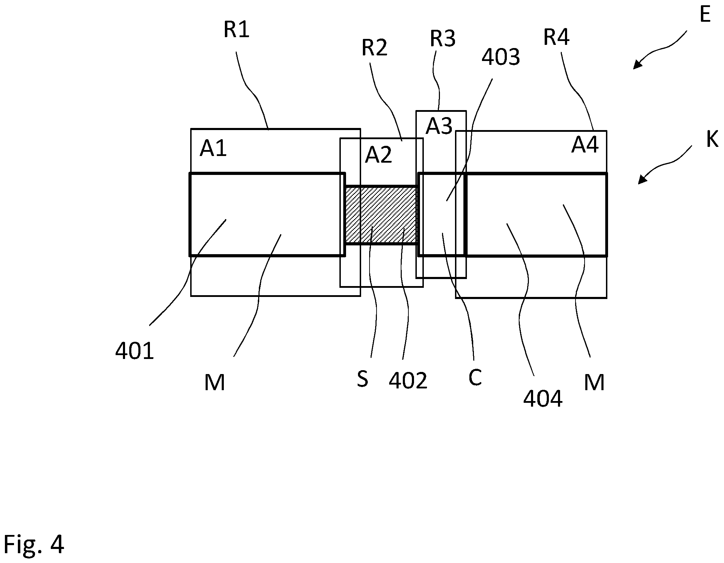

Figur 4 zeigt eine erste beispielhafte Endkonfiguration E eines Kabelteilstücks K. Die Endkonfiguration E umfasst von links nach rechts einen Mantel M des Kabels, es folgt ein Schirm S des Kabels, der Schirmung S folgt eine Crimphülse C nach. Der Crimphülse C folgt wieder ein Mantel M des Kabels nach.

Eine derartige Endkonfiguration E kann mittels eines Bilds der Bildverarbeitungseinrichtung erfasst werden und wird der Auswerteeinrichtung zugeführt. Figur 4 zeigt nun ein beispielhaftes Resultat einer Anwendung des von der Auswerteeinrichtung umfassten neuronalen Netzes auf das erfasste Bild der Endkonfiguration E. Entsprechend kann dies erfolgen, wenn das Bild eine Vielzahl an Endkonfigurationen E zeigt.

Mittels der Auswerteeinrichtung werden vier interessierende Bereiche für die vorliegende Endkonfiguration E ermittelt. Es wird ein erster interessierender Bereich 401 ermittelt, welcher dem in der Figur linksseitigen Mantel zugeordnet ist. Dieser weist eine Wahrscheinlichkeit oberhalb eines Schwellwerts auf, so dass mittels einer Box bzw. mittels eines Rahmens R1 markiert wird.

Dabei liefert das neuronale Netz eine Position des Rahmens als x-y-Koordinate im Bild mit einer zugehörigen Längenangabe in x und y Richtung. Dies gilt für sämtliche Rahmen in Figur 4 und auch den Folgefiguren entsprechend.

Ferner wird mittels des neuronalen Netzes ein zweiter interessierender Bereich 402 ermittelt, welcher einen Wahrscheinlichkeitswert aufweist, welcher über einem Schwellwert liegt. Dieser zweite interessierende Bereich ist der Schirmung S zugeordnet und wird ebenfalls mit einem Rahmen R2 auf dem Bild markiert.

Ferner wird mittels des neuronalen Netzes ein dritter interessierender Bereich 403 ermittelt, welcher einen Wahrscheinlichkeitswert aufweist, welcher über einem Schwellwert liegt. Dieser dritte interessierende Bereich ist der Crimphülse zugeordnet und wird ebenfalls mit einem Rahmen R3 auf dem Bild markiert.

Ferner wird mittels des neuronalen Netzes ein vierter interessierender Bereich 404 ermittelt, welcher einen Wahrscheinlichkeitswert aufweist, welcher über einem Schwellwert liegt. Dieser vierte interessierende Bereich ist dem in der Figur 4 rechtsseitigen Mantel M zugeordnet und wird ebenfalls mit einem Rahmen R4 auf dem Bild markiert.

Den Rahmen R1, R2, R3, R4 sind vorzugsweise Angaben A1, A1, A2, A3 zugeordnet, welche weitere Informationen zum ermittelten interessierende Bereich 401, 402, 403 und 404 enthalten. Beispielsweise können die Angaben A1 bis A4 jeweils die Wahrscheinlichkeit umfassen, mit der ein interessierender Bereich ermittelt wurde. Ferner umfassen diese Angaben A1, A1, A2, A3 vorzugsweise das Ergebnis der Klassifikation, wie oben dargelegt.

Insbesondere kann es für die schnellere Erfassbarkeit des Personals vorteilhaft sein, das Ergebnis der Klassifikation, z.B. in Ordnung vs. nicht in Ordnung, als Farbcodierung der Rahmen R1 bis R4 wiederzugeben. So kann bspw. ein Ampelsystem genutzt werden, wobei ein grüner Rahmen für fehlerfrei und hohe Wahrscheinlichkeit der Fehlerfreiheit steht, rot für fehlerbehaftet und hohe Wahrscheinlichkeit des Fehlervorliegens, und gelb für Klassifikationsergebnisse mit nicht ausreichend hoher Wahrscheinlichkeit, so dass diese einer Überprüfung bedürfen.

Ferner kann die Angabe A1 bis A4, ggf. erst auf Benutzeranfrage, z.B. in dem man mittels eines Steuergeräts, z.B. einer Maus, über die Angabe hovert, das Fehlerbild konkret identifizieren, so dass für das Personal schnell ermittelbar und ersichtlich ist, welches Fehlerbild für eine Endkonfiguration E vorliegt.

Jede dieser ermittelten Bereiche kann isoliert klassifiziert werden, d.h. z.B. ist das Schirmgeflecht prozesskonform verarbeitet oder nicht; ist die Crimphülse C prozesskonform verarbeitet oder nicht, insbesondere liegt dies im verpressten oder unverpressten Zustand vor bzw. ist die Verpressung fehlerfrei erfolgt.

In der vorliegenden Endkonfiguration E wird weiter eine relationale Komponente bei der Klassifikation berücksichtigt, nämlich ist die Crimphülse C, in Figur 4 der dritte interessierende Bereich 403, korrekt zwischen dem Schirmgeflecht S, in Figur 4 der zweite interessierende Bereich 402, und dem Mantel M, in Figur 4 dem vierten interessierenden Bereich 404, positioniert. D.h. ist die Relativlage des dritten interessierenden Bereich 403, zum zweiten und vierten interessierenden Bereich 402 und 404 fehlerfrei.

Es kann somit mittels der Auswerteeinrichtung für diese Endkonfiguration E ermittelt werden, ob die Crimphülse C an der richtigen Position angeordnet ist, nämlich zwischen dem Schirmgeflecht und dem Mantel und ob die Crimphülse korrekt verpresst wurde oder nicht korrekt verpresst wurde bzw. nicht verpresst wurde.

Eine derartige beispielhafte Auswertung kann für eine Vielzahl parallel verarbeiteter und bildlich erfasster Endkonfigurationen E erfolgen.

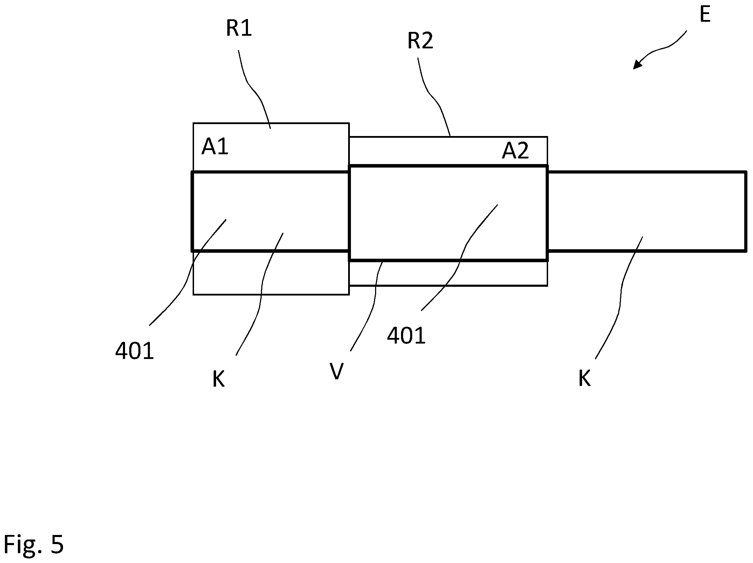

Figur 5 zeigt eine zweite beispielhafte Endkonfiguration E eines Kabelteilstücks. Diese Endkonfiguration E zeigt ein Kabel K, ermittelt als erster interessierender Bereich 401, und ein Verbindungsrohr V, ermittelt als zweiter interessierender Bereich 402. Die ermittelten interessierenden Bereiche 401 und 402 sind jeweils wieder mittels eines Rahmens R1 bzw. R2 kenntlich gemacht. Die entsprechenden Angaben A1 bzw. A2, wie bspw. zu Figur 4 erläutert, sind im zugehörigen Rahmen R1 bzw. R2 angeordnet.

Mittels der Auswerteeinrichtung kann aus dem die Endkonfiguration E erfassenden Bild ermittelt werden, dass es sich um einen ersten interessierenden Bereich 401 handelt, welches als Kabel klassifiziert ist, und um einen zweiten interessierenden Bereich 402, bei dem es sich um ein Verbindungsrohr handelt. Durch Berücksichtigung der Relativlage des ersten und zweiten interessierenden Bereichs 401 und 402 für die Klassifikation kann ermittelt werden, ob einerseits das Verbindungsrohr fehlerfrei zum Kabel angeordnet ist und ob ferner der Nullschnitt für das Kabel korrekt durchgeführt wurde.

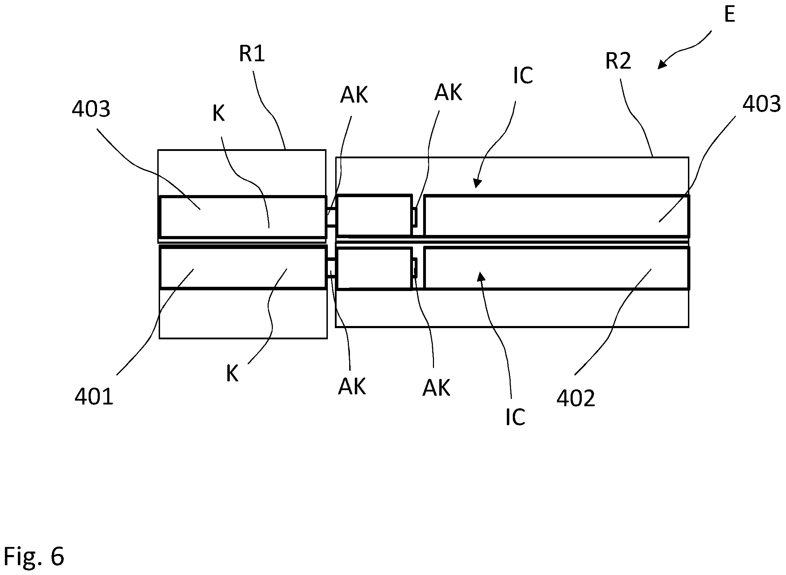

Figur 6 zeigt eine dritte beispielhafte Endkonfiguration E eines Kabelteilstücks. Figur 6 zeigt zwei Kabel K und zwei an den abisolierten Kabelenden AK, jeweils auch als Kontakt-Pin bezeichnet, angeordnete Innenkontakt-Crimps IC. Die bildlich erfasste Endkonfiguration E wird wieder der Auswerteeinrichtung zugeführt.

Es werden vier interessierende Bereiche 401 bis 404 mittels der Auswerteeinrichtung ermittelt. Dabei entsprechen der erste und dritte interessierende Bereich 401 bzw. 403 jeweils dem Kabelteilstück vor den abisolierten Teilen AK des Kabels bzw. der Kontakt-Pins. Der zweite und der vierte interessierende Bereich 402 bzw. 403 entsprechen jeweils einem Innenkontakt-Crimp IC. Jeder Innenkontakt-Crimp IC wird mit einem seiner Abschnitte jeweils über einen Kontakt-Pin geführt und gecrimpt.

Mittels der Auswerteeinrichtung kann aus dem die Endkonfiguration E erfassenden Bild ermittelt werden, dass es sich um einen ersten und dritten interessierenden Bereich 401, 403 handelt, welches dem an den Kontakt-Pin AK angrenzendes Kabelteilstück K klassifiziert ist, und um einen zweiten und vierten interessierenden Bereich 402 bzw. 404, bei dem es sich jeweils um eine Innenkontakt-Crimp IC handelt. Diese sind wieder über entsprechende Rahmen R1 bis R4 kenntlich gemacht. Auf die Angaben in den Rahmen wurde aus Gründen der Übersichtlichkeit für Figur 6 verzichtet.

Durch Berücksichtigung der Relativlage des ersten und des zweiten interessierenden Bereichs 401 und 402 bzw. der Relativlage des dritten und des vierten interessierenden Bereichs 403 und 404 für die Klassifikation kann ermittelt werden, ob der Innenkontakt-Crimp jeweils fehlerfrei auf den Pin AK gecrimpt wurde. Insbesondere kann aus dem Abstand des ersten und des zweiten interessierenden Bereichs 401 und 402 bestimmt werden, ob die Position des Innenkontakt-Crimps zum Pin fehlerfrei ist. Entsprechend für den dritten und vierten interessierenden Bereich 403 und 404.

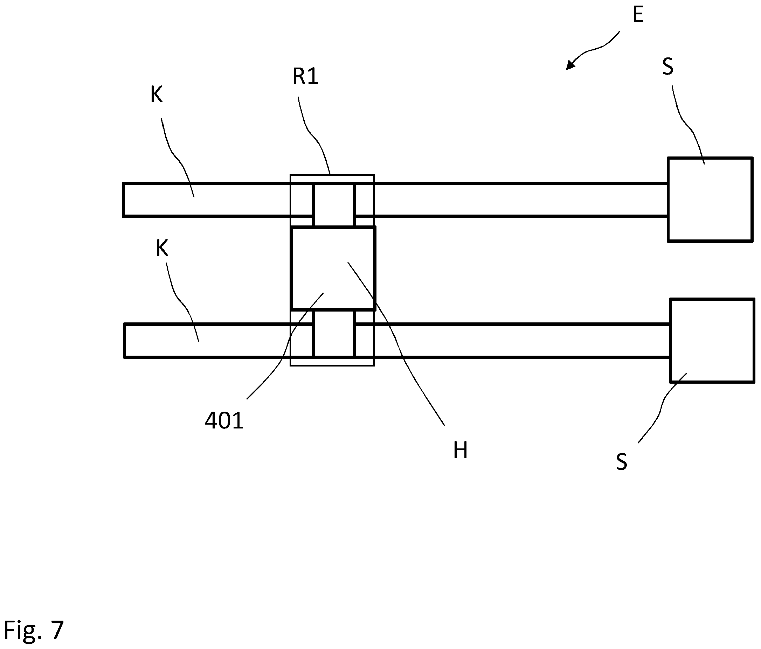

Figur 7 zeigt eine vierte beispielhafte Endkonfiguration E. Diese umfasst zwei Kabel K, welche jeweils mit einem Stecker S bestückt sind. Diese Kabel K sollen mittels einer Kabelhaltevorrichtung H, vorliegend auch als Separator bezeichnet, bestückt werden.

Die bildliche Erfassung dieser Endkonfiguration E erfolgt wieder mit einer entsprechend hergerichteten Auswerteeinrichtung. In einem ersten Schritt erfolgt zunächst wieder die Ermittlung des interessierenden Bereichs 401, welche hier der Halteeinrichtung H entspricht. Mittels der anschließenden Klassifikation des ermittelten interessierenden Bereichs 401 kann ermittelt werden, ob die Halteeinrichtung H fehlerfrei an den Kabelteilstücken K befestigt ist.

Es versteht sich, dass die vorgenannten Beispiele für die Anwendung des entsprechend ausgebildeten neuronalen Netzes nicht abschließend sind, und eine Vielzahl weiterer Anwendungsfälle für die Kabelverarbeitung dem Fachmann geläufig sind. Insbesondere kann eine Ausführungsform der Erfindung auch angewendet werden für die Überprüfung der Kennzeichnung von Kabeln, insbesondere Laserkennzeichnungen auf dem Kabelmantel, für das korrekte Anbringen von Etiketten und Labels am Kabel, insbesondere im Hinblick auf die Übereinstimmung mit der Laserkennzeichnung, das Anbringen von Tüllen und deren Haltern, Anbringen von Kupplungen für Sensorleitungen, der Anordnung von Schutzkappen auf Steckern, von Ferulen auf optischen Leiterendstücken, Anordnung eines Silikonisolierschlauchs auf dem Kabel, Anbringung von Außenleitern, etc.

Figur 7 zeigt einen schematischen Verfahrensablauf als Flussdiagramm für eine Ausführungsform des Verfahrens zum Betreiben einer Kabelverarbeitungsvorrichtung.

In einem Verfahrensschritt S1 erfolgt eine Verarbeitung mindestens eines Kabelteilstücks, vorzugsweise einer Vielzahl in Kabelteilstücken, jeweils von einer Anfangskonfiguration in eine Endkonfiguration. Es kann sich um einen beliebigen Bearbeitungsschritt handeln. Im Hinblick auf die nachfolgende bildliche Erfassung der wenigstens einen Endkonfiguration sollte der Bearbeitungsschritt aber das optische Erscheinungsbild des Kabelendstücks beeinflussen, da eine folgende Auswertung bildbasiert erfolgt.

In einem Verfahrensschritt S2 wird mittels einer Bildaufnahmeeinrichtung die im Aufnahmebereich angeordnete wenigstens eine Endkonfiguration, vorzugsweise die Vielzahl an Endkonfigurationen, erfasst und das Bild einer Auswerteeinrichtung zur Auswertung der auf dem Bild erfassten Endkonfiguration zugeführt. Im nachfolgenden wird davon ausgegangen - ohne Beschränkung der Anwendbarkeit für das Prozessieren nur einer einzelnen Endkonfiguration -, dass eine Vielzahl von Endkonfigurationen erfasst wird. Die Bilderfassung kann von der Auswerteeinrichtung oder einer Steuereinrichtung veranlasst sein.

In einem Verfahrensschritt S3 erfolgt eine Prüfung mittels des neuronalen Netzes, ob alle abgebildeten Endkonfigurationen vollständig bildlich erfasst sind oder ob Endkonfigurationen auf dem Bild abgebildet sind, die unvollständig erfasst worden sind. Sind Endkonfigurationen unvollständig erfasst, erfolgt eine Ausgabe eines Fehlersignals, ggf. erst mit Vorliegen der Klassifikation für die vollständig erfassten Endkonfigurationen, aus dem eine unvollständige Bilderfassung ersichtlich wird. Es kann dann der Grund für die nicht vollständige Erfassung beseitigt werden.

Für die vollständig erfassten Endkonfigurationen erfolgt in einem nächsten Verfahrensschritt S4 mittels des neuronalen Netzes eine Bestimmung einer Vielzahl an interessierender Bereiche aus dem Bild, wobei auch jede Endkonfiguration eine Mehrzahl an interessierenden Bereichen aufweisen kann. Das neuronale Netz ist entsprechend ausgebildet, die gewünschte Vielzahl an interessierenden Bereichen zu bestimmen.

In einem nächsten Verfahrensschritt S5 erfolgt eine Klassifikation für die ermittelten interessierenden Bereiche hinsichtlich des Vorliegens eines Fehlerbilds und es wird ein der Klassifikation entsprechendes Ergebnis ermittelt.

In einem nächsten Verfahrensschritt S6 wird ein Steuersignal erzeugt und ausgegeben, welches abhängig vom wenigstens einen ermittelten interessierenden Bereich und/oder abhängig von dem ermittelten Ergebnis der Klassifikation der wenigstens einen Endkonfiguration ist. Vorzugsweise erfolgt die Ausgabe des Steuersignals an eine Steuereinrichtung.

In einem Verfahrensschritt S 7 erfolgt eine grafische Ausgabe der von der Auswerteeinrichtung ermittelten Informationen aus dem erfassten Bild auf Grundlage des Steuersignals. Es wird die Vielzahl an ermittelten interessierenden Bereichen und ein zugehöriges Klassifikationsergebnis auf einem Monitor ausgeben.

Ferner prüft die Steuereinrichtung in einem Verfahrensschritt S8, ob eine Beeinflussung der Kabelverarbeitungseinheit, einer Kabelvorverarbeitungseinheit oder eine Kabelfolgeverarbeitungseinheit, oder eine Aussonderung eines Kabels aus der Fertigung auf Grundlage des Steuersignals zweckmäßig ist.

Soweit erforderlich erfolgt in einem Verfahrensschritt S9 ein Steuereingriff für eine entsprechende Stellgröße der Fertigung, die zur Vermeidung eines Fehlerbilds für eine Endkonfiguration beiträgt, das Fehlerbild für eine bestimmte Endkonfiguration korrigiert oder eine Aussonderung eines Kabels oder Kabelteilstücks aus der Fertigung veranlasst.

Da es sich bei der vorhergehend detailliert beschriebenen Vorrichtungen und Verfahren um Ausführungsbeispiele handelt, können sie in üblicher Weise vom Fachmann in einem weiten Umfang modifiziert werden.

Insbesondere sind die mechanischen Anordnungen und die Größenverhältnisse der einzelnen Elemente zueinander lediglich beispielhaft.

### BEZUGSZEICHENLISTE

- 100: Kabelverarbeitungsvorrichtung
- 200: Kabelverarbeitungseinheit
- 201: Kabelfolgeverarbeitungseinheit
- 202: Kabelvorverarbeitungseinheit
- 210: Kabelaufnahme
- 300: Bildaufnahmeeinrichtung
- 401: interessierender Bereich, erster
- 402: interessierender Bereich, zweiter
- 403: interessierender Bereich, dritter
- 404: interessierender Bereich, vierter
- 500: Auswerteeinrichtung
- 600: Maschinenlesbarer Programmcode
- 700: Steuereinrichtung
- 710: Kabelfertigungssteuerung
- 800: Bildausgabeeinrichtung

- K, K1, K2, K3, Kn: Kabelteilstücke
- E, E1, E2, E3, En: Endkonfigurationen
- C: Crimphülse
- IC: Innenkontakt-Crimp
- S: Stecker
- M: Mantel
- H: Kabelhalteeinrichtung
- R1, R2, R3, R4: Rahmen, welche einen ermittelten interessierenden Bereich umgeben
- A1, A2, A3, A4: Angaben zur Klassifikation

- S1: Gleichzeitige Verarbeitung einer Vielzahl von Kabelteilstücken jeweils von einer Anfangskonfiguration in eine Endkonfiguration mittels einer Kabelverarbeitungseinheit.
- S2: Erfassung der im Aufnahmebereich angeordneten Vielzahl an Endkonfigurationen
- S3: Prüfung auf vollständige Erfassung von Endkonfigurationen
- S4: Ermittlung einer Vielzahl interessierender Bereiche
- S5: Durchführen der Klassifikation für die ermittelten interessierenden Bereiche
- S6: Erzeugen und Ausgeben eines Steuersignals auf Grundlage der ermittelten interessierenden Bereiche und deren Klassifikation
- S7: Grafische Ausgabe der Resultate der Auswerteeinrichtung
- S8: Prüfung auf Stellgrößeneingriff für Kabelverarbeitungseinheit, Kabelvorverarbeitungseinheit, Kabelfolgeverarbeitungseinheit und Aussonderung
- S9: Durchführen der aus der Prüfung bestimmten Maßnahme

## Patentansprüche

1. Verfahren zum Betreiben einer Kabelverarbeitungsvorrichtung (100), umfassend die Verfahrensschritte:
- Verarbeiten (S1) wenigstens eines Kabelteilstücks (K, K1, K2, K3, Kn), insbesondere eines Kabelendes, mittels einer Kabelverarbeitungseinheit (200) von einer Anfangskonfiguration zu einer Endkonfiguration (E, E1, E2, E3, En),
- Erfassen (S2) wenigstens eines Bilds der wenigstens einen Endkonfiguration (E1, E2, E3, En) mittels einer Bildaufnahmeeinrichtung (300),
- Anwenden (S4, S5) eines trainierten neuronalen Netzes auf das wenigstens eine erfasste Bild, wobei das trainierte neuronale Netz dazu ausgebildet ist, in einem ersten Schritt wenigstens einen interessierenden Bereich (401, 402, 403, 404) der wenigstens einen Endkonfiguration (E, E1, E2, E3, En) aus dem wenigstens einen erfassten Bild zu ermitteln (S4) und dasselbe neuronale Netz dazu ausgebildet ist, in einem zweiten Schritt eine Klassifikation des wenigstens einen ermittelten interessierenden Bereichs (401, 402, 403, 404) hinsichtlich des Vorliegens wenigstens eines angelernten Fehlerbilds der wenigstens einen Endkonfiguration (E, E1, E2, E3, En) durchzuführen und ein der Klassifikation zugeordnetes Ergebnis (A1, A2, A3, A4) zu ermitteln (S5),
- Erzeugen und Ausgeben (S6) eines Steuersignals abhängig vom wenigstens einen ermittelten interessierenden Bereich (401, 402, 403, 404) und abhängig von dem ermittelten Ergebnis (A1, A2, A3, A4) der Klassifikation der wenigstens einen Endkonfiguration (E, E1, E2, E3, En),
- wobei das trainierte neuronale Netz dazu ausgebildet ist, die vollständige bildliche Erfassung einer Endkonfiguration (E, E1, E2, E3, En) zu ermitteln (S3), wobei das trainierte neuronale Netz auf das erfasste Bild angewendet wird (S3), wobei im Falle der ermittelten unvollständigen Erfassung wenigstens einer Endkonfiguration (E, E1, E2, E3, En) ein Steuersignal erzeugt und ausgegeben wird, welches die Mitteilung eines Bilderfassungsfehlers veranlasst.

2. Verfahren nach dem vorhergehenden Anspruch,
wobei mittels der Bilderfassungseinrichtung (300) ein Bild erfasst wird, welches zwei bis 100 Endkonfigurationen zeigt, wobei das trainierte neuronale Netz dazu ausgebildet ist, jeweils wenigstens einen interessierenden Bereich (401, 402, 403, 404) für die zwei bis 100 Endkonfigurationen (E, E1, E2, E3, En), insbesondere für jede der zwei bis 100 Endkonfigurationen (E, E1, E2, E3, En), zu ermitteln (S4) und ein der Klassifikation der interessierenden Bereiche (401, 402, 403, 404) zugeordnetes Ergebnis (A1, A2, A3, A4) zu ermitteln (S5) und das trainierte neuronale Netz auf das erfasste Bild angewendet wird (S4, S5), wobei ein Steuersignal für die zwei bis 100 erfassten Endkonfigurationen (E, E1, E2, E3, En), insbesondere für jede der zwei bis 100 erfassten Endkonfigurationen (E, E1, E2, E3, En), auf Grundlage des ermittelten wenigstens einen interessierenden Bereichs (401, 402, 403, 404) und/oder des der Klassifikation zugeordneten Ergebnisses (A1, A2, A3, A4) für die jeweilige Endkonfiguration (E, E1, E2, E3, En) erzeugt und ausgegeben wird (S6).

3. Verfahren nach einem der vorhergehenden Ansprüche,
wobei das trainierte neuronale Netz dazu ausgebildet ist, für wenigstens eine Endkonfiguration (E, E1, E2, E3, En) wenigstens einen ersten interessierenden Bereich (401, 402, 403, 404) und für dieselbe Endkonfiguration (E, E1, E2, E3, En) wenigstens einen zweiten, vom ersten interessierenden Bereich räumlich abweichenden interessierenden Bereich (401, 402, 403, 404) aus dem wenigstens einen erfassten Bild zu ermitteln und das neuronale Netz ferner dazu ausgebildet ist, für die Klassifikation zusätzlich einen Relativparameter, insbesondere eine Relativlage, des wenigstens ersten interessierenden Bereichs (401, 402, 403, 404) und des zweiten interessierenden Bereichs (401, 402, 403, 404) zu berücksichtigen und ein der Klassifikation zugeordnetes Ergebnis (A1, A2, A3, A4) zu ermitteln und wobei das trainierte neuronale Netz auf das wenigstens eine Bild angewendet wird (S4, S5), wobei ein Steuersignal für die wenigstens eine Endkonfiguration (E, E1, E2, E3, En) anhand des Ergebnisses (A1, A2, A3, A4) der die Relativlage berücksichtigenden Klassifikation erzeugt und ausgegeben (S6) wird.

4. Verfahren nach einem der vorhergehenden Ansprüche,
wobei die Erfassung (S3) des Bildes der wenigstens einen Endkonfiguration (E, E1, E2, E3, En) mittels einer digitalen Bildaufnahmeeinrichtung (300) erfolgt, wobei der wenigstens eine interessierende Bereich (401, 402, 403, 404) durch mindestens 20 Pixel, vorzugsweise mehr als 50 Pixel, wiedergegeben wird.

5. Verfahren nach einem der vorhergehenden Ansprüche,
wobei mittels des Steuersignals eine grafische Anzeige des wenigstens einen ermittelten interessierenden Bereichs (401, 402, 403, 404) in einem die wenigstens eine Endkonfiguration (E, E1, E2, E3, En) zeigenden Bild, insbesondere dem Bild, auf welches das trainierte neuronale Netz angewendet wurde, insbesondere als farbliche Umrandung (R1, R2, R3, R4) des wenigstens einen ermittelten interessierenden Bereichs(401, 402, 403, 404), auf einer Bildausgabeeinrichtung (800) veranlasst wird.

6. Verfahren nach einem der vorhergehenden Ansprüche,
wobei mittels des Steuersignals eine grafische Anzeige des Ergebnisses (A1, A2, A3, A4) der Klassifikation für die wenigstens eine Endkonfiguration (E, E1, E2, E3, En) in einem die wenigstens eine Endkonfiguration (E, E1, E2, E3, En) zeigenden Bild, insbesondere dem der Klassifikation zugrunde gelegten Bild, auf einer Bildausgabeeinrichtung (800) veranlasst wird.

7. Verfahren nach Anspruch 6,
wobei mittels der grafischen Anzeige ein dem Ergebnis (A1, A2, A3, A4) der der Klassifikation zugeordnetes Fehlerbild in Form einer Fehlerbildbezeichnung (A1, A2, A3, A4) wiedergegeben wird.

8. Verfahren nach Anspruch 7,
wobei mittels der grafischen Anzeige eine Wahrscheinlichkeit (A1, A2, A3, A4) für das ermittelte Fehlerbild wiedergegeben wird.

9. Verfahren nach einem der vorhergehenden Ansprüche,
wobei mittels des Steuersignals der Betrieb der Kabelverarbeitungseinheit (200) derart beeinflusst wird (S9), dass die Endkonfiguration (E, E1, E2, E3, En) eines zeitlich nachfolgend zu verarbeitenden Kabelteilstücks (K) mittels der Kabelverarbeitungseinheit (200) einer gewünschten Endkonfiguration (E, E1, E2, E3, En) angenähert wird.

10. Verfahren nach einem der vorhergehenden Ansprüche,
wobei mittels des Steuersignals eine Kabelfolgeverarbeitung einer der Kabelverarbeitungseinheit (200) prozesstechnisch nachgelagerten Kabelfolgeverarbeitungseinheit (201) wenigstens einer klassifizierten Endkonfiguration (E, E1, E2, E3, En) abhängig von dem Ergebnis (A1, A2, A3, A4) der Klassifikation dieser Endkonfiguration (E, E1, E2, E3, En) beeinflusst wird.

11. Verfahren nach einem der vorhergehenden Ansprüche,
wobei mittels des Steuersignals eine Aussonderung eines Kabelteilstücks (K) mit einer fehlerbildbehafteten Endkonfiguration (E, E1, E2, E3, En) aus einem noch zu durchlaufenden Fertigungsprozess veranlasst wird, wobei eine Aussonderung dann erfolgt, wenn das Ergebnis (A1, A2, A3, A4) der Klassifikation für diese Endkonfiguration einem vorgegebenen Fehlerbild mit einer Wahrscheinlichkeit oberhalb eines vorgegebenen Wahrscheinlichkeitsschwellwerts entspricht und nicht mittels einer Kabelfolgeverarbeitungseinheit (202) korrigierbar ist.

12. Kabelverarbeitungsvorrichtung (100) aufweisend:
- wenigstens eine Kabelverarbeitungseinheit (200), welche dazu ausgebildet ist, wenigstens ein Kabelteilstück (K), insbesondere ein Kabelende, aufzunehmen und derart zu verarbeiten, dass das wenigstens eine Kabelteilstück (K) von einer Anfangskonfiguration in eine Endkonfiguration (E, E1, E2, E3, En) überführt wird,
- eine Bildaufnahmeeinrichtung (300), angeordnet und ausgebildet zur Aufnahme zumindest eines Bilds der wenigstens einen Endkonfiguration (E, E1, E2, E3, En),
- eine Auswerteeinrichtung (500) und eine Steuereinrichtung (700) zur Steuerung und/oder Regelung der Kabelverarbeitungsvorrichtung (100), wobei die Auswerteeinheit (500) mit der Bildaufnahmeeinrichtung (300) und der Steuereinrichtung (700) wirkverbunden ist, und wobei in die Auswerteeinrichtung (500) und/oder in die Steuereinrichtung (700) maschinenlesbarer Programmcode (600) ladbar ist, welcher bei dessen Ausführung die Durchführung des Verfahrens nach einem der vorhergehenden Ansprüche veranlasst.

13. Maschinenlesbarer Programmcode für eine Auswerteeinrichtung und/oder Steuereinrichtung, welcher Steuerbefehle umfasst, welche bei deren Ausführung mittels der Auswerteeinrichtung und/oder der Steuereinheit die Durchführung des Verfahrens nach einem der vorhergehenden Verfahrensansprüche veranlasst.

14. Steuer- und/oder Auswerteeinrichtung mit maschinenlesbarem Programmcode, welcher Steuerbefehle umfasst, welche bei deren Ausführung mittels der Auswerteeinrichtung und/oder Steuereinrichtung die Durchführung des Verfahrens nach einem der vorhergehenden Verfahrensansprüche veranlasst.

## Claims

1. Method for operating a cable processing apparatus (100), comprising the following method steps:
- processing (S1) of at least one cable segment (K, K1, K2, K3, Kn), in particular of a cable end, by means of a cable processing unit (200) from an initial configuration to an end configuration (E, E1, E2, E3, En),
- capturing (S2) at least one image of the at least one end configuration (E1, E2, E3, En) by means of an image recording device (300),
- applying (S4, S5) a trained neural network to the at least one captured image, wherein the trained neural network is designed, in a first step, to determine (S4) at least one region (401, 402, 403, 404) of interest of the at least one end configuration (E, E1, E2, E3, En) from the at least one captured image and the same neural network is designed, in a second step, to carry out a classification of the at least one determined region (401, 402, 403, 404) of interest with regard to the presence of at least one learned error pattern of the at least one end configuration (E, E1, E2, E3, En) and to determine (S5) a result (A1, A2, A3, A4) assigned to the classification,
- generating and outputting (S6) a control signal depending on the at least one determined region (401, 402, 403, 404) of interest and depending on the determined result (A1, A2, A3, A4) of the classification of the at least one end configuration (E, E1, E2, E3, En),
- wherein the trained neural network is designed to determine (S3) the complete image capture of an end configuration (E, E1, E2, E3, En), wherein the trained neural network is applied (S3) to the captured image, wherein in the case of the determined incomplete capture of at least one end configuration (E, E1, E2, E3, En), a control signal that causes the notification of an image capture error is generated and output.

2. Method according to the preceding claim,
wherein an image showing two to 100 end configurations is captured by means of the image capture device (300), wherein the trained neural network is designed to determine (S4) in each case at least one region (401, 402, 403, 404) of interest for the two to 100 end configurations (E, E1, E2, E3, En), in particular for each of the two to 100 end configurations (E, E1, E2, E3, En), and to determine (S5) a result (A1, A2, A3, A4) assigned to the classification of the regions (401, 402, 403, 404) of interest and the trained neural network is applied (S4, S5) to the captured image, wherein a control signal is generated and output (S6) for the two to 100 captured end configurations (E, E1, E2, E3, En), in particular for each of the two to 100 captured end configurations (E, E1, E2, E3, En), on the basis of the determined at least one region (401, 402, 403, 404) of interest and/or on the basis of the result (A1, A2, A3, A4) assigned to the classification for the respective end configuration (E, E1, E2, E3, En).

3. Method according to either of the preceding claims,
wherein the trained neural network is designed to determine, for at least one end configuration (E, E1, E2, E3, En), at least one first region (401, 402, 403, 404) of interest and, for the same end configuration (E, E1, E2, E3, En), at least one second region (401, 402, 403, 404) of interest, differing spatially from the first region of interest, from the at least one captured image and the neural network is furthermore designed, for the classification, additionally to take account of a relative parameter, in particular a relative position, of the at least first region (401, 402, 403, 404) of interest and the second region (401, 402, 403, 404) of interest and to determine a result (A1, A2, A3, A4) assigned to the classification, and wherein the trained neural network is applied (S4, S5) to the at least one image, wherein a control signal is generated and output (S6) for the at least one end configuration (E, E1, E2, E3, En) on the basis of the result (A1, A2, A3, A4) of the classification taking into account the relative position.

4. Method according to any of the preceding claims,
wherein the capture (S3) of the image of the at least one end configuration (E, E1, E2, E3, En) is effected by means of a digital image recording device (300), wherein the at least one region (401, 402, 403, 404) of interest is represented by at least 20 pixels, preferably more than 50 pixels.

5. Method according to any of the preceding claims,
wherein the control signal causes a graphical display of the at least one determined region (401, 402, 403, 404) of interest in an image showing the at least one end configuration (E, E1, E2, E3, En), in particular the image to which the trained neural network was applied, in particular as a coloured border (R1, R2, R3, R4) of the at least one determined region (401, 402, 403, 404) of interest, on an image output device (800).

6. Method according to any of the preceding claims,
wherein the control signal causes a graphical display of the result (A1, A2, A3, A4) of the classification for the at least one end configuration (E, E1, E2, E3, En) in an image showing the at least one end configuration (E, E1, E2, E3, En), in particular the image taken as a basis for the classification, on an image output device (800) .

7. Method according to Claim 6,
wherein the graphical display represents an error pattern assigned to the result (A1, A2, A3, A4) of the classification in the form of an error pattern designation (A1, A2, A3, A4).

8. Method according to Claim 7,
wherein the graphical display represents a probability (A1, A2, A3, A4) for the determined error pattern.

9. Method according to any of the preceding claims,
wherein the operation of the cable processing unit (200) is influenced (S9) by means of the control signal in such a way that the end configuration (E, E1, E2, E3, En) of a cable segment (K) to be processed subsequently in time is approximated to a desired end configuration (E, E1, E2, E3, En) by means of the cable processing unit (200).

10. Method according to any of the preceding claims,
wherein downstream cable processing performed by a downstream cable processing unit (201), disposed downstream of the cable processing unit (200) in process engineering terms, of at least one classified end configuration (E, E1, E2, E3, En) is influenced by means of the control signal depending on the result (A1, A2, A3, A4) of the classification of this end configuration (E, E1, E2, E3, En).

11. Method according to any of the preceding claims,
wherein the control signal causes segregation of a cable segment (K) having an end configuration (E, E1, E2, E3, En) with an error pattern from a manufacturing process yet to be undertaken, wherein segregation takes place if the result (A1, A2, A3, A4) of the classification for this end configuration corresponds to a predefined error pattern with a probability above a predefined probability threshold value and is not correctable by means of a downstream cable processing unit (202).

12. Cable processing apparatus (100) comprising:
- at least one cable processing unit (200) designed to receive at least one cable segment (K), in particular a cable end, and process it in such a way that the at least one cable segment (K) is converted from an initial configuration into an end configuration (E, E1, E2, E3, En),
- an image recording device (300), arranged and designed for recording at least one image of the at least one end configuration (E, E1, E2, E3, En),
- an evaluation device (500) and a control device (700) for open-loop and/or closed-loop control of the cable processing apparatus (100), wherein the evaluation unit (500) is operatively connected to the image recording device (300) and the control device (700), and wherein machine-readable program code (600) is loadable into the evaluation device (500) and/or into the control device (700) and, when executed, causes the method according to any of the preceding claims to be carried out.

13. Machine-readable program code for an evaluation device and/or control device, comprising control instructions which, when executed by means of the evaluation device and/or the control unit, cause the method according to any of the preceding method claims to be carried out.

14. Control and/or evaluation device with machine-readable program code comprising control instructions which, when executed by means of the evaluation device and/or the control device, cause the method according to any of the preceding method claims to be carried out.

## Revendications

1. Procédé permettant de faire fonctionner un dispositif de traitement de câble (100), comprenant les étapes de procédé consistant à :
- traiter (S1) au moins un tronçon de câble (K, K1, K2, K3, Kn), en particulier une extrémité de câble, au moyen d'une unité de traitement de câble (200) d'une configuration initiale en une configuration finale (E, E1, E2, E3, En),
- détecter (S2) au moins une image de ladite au moins une configuration finale (E1, E2, E3, En) au moyen d'un équipement de capture d'image (300),
- appliquer (S4, S5) un réseau neuronal entraîné à ladite au moins une image détectée, dans lequel le réseau neuronal entraîné est réalisé pour déterminer (S4) dans une première étape au moins une zone d'intérêt (401, 402, 403, 404) de ladite au moins une configuration finale (E, E1, E2, E3, En) à partir de ladite au moins une image détectée, et le même réseau neuronal est réalisé pour effectuer dans une deuxième étape une classification de ladite au moins une zone d'intérêt déterminée (401, 402, 403, 404) quant à la présence d'au moins une image de défaut apprise de ladite au moins une configuration finale (E, E1, E2, E3, En) et pour déterminer (S5) un résultat (A1, A2, A3, A4) associé à la classification,
- générer et émettre (S6) un signal de commande en fonction de ladite au moins une zone d'intérêt déterminée (401, 402, 403, 404) et en fonction du résultat déterminé (A1, A2, A3, A4) de la classification de ladite au moins une configuration finale (E, E1, E2, E3, En),
- dans lequel le réseau neuronal entraîné est réalisé pour déterminer (S3) la détection visuelle complète d'une configuration finale (E, E1, E2, E3, En), dans lequel le réseau neuronal entraîné est appliqué (S3) à l'image détectée, dans lequel dans le cas de la détection incomplète déterminée d'au moins une configuration finale (E, E1, E2, E3, En), un signal de commande est généré et émis qui provoque la notification d'une erreur de détection d'image.

2. Procédé selon la revendication précédente, dans lequel une image est détectée au moyen de l'équipement de détection d'image (300) qui montre deux à 100 configurations finales, dans lequel le réseau neuronal entraîné est réalisé pour déterminer (S4) respectivement au moins une zone d'intérêt (401, 402, 403, 404) pour les deux à 100 configurations finales (E, E1, E2, E3, En), en particulier pour chacune des deux à 100 configurations finales (E, E1, E2, E3, En), et pour déterminer (S5) un résultat (A1, A2, A3, A4) associé à la classification des zones d'intérêt (401, 402, 403, 404), et le réseau neuronal entraîné est appliqué (S4, S5) à l'image détectée, dans lequel un signal de commande est généré et émis (S6) pour les deux à 100 configurations finales détectées (E, E1, E2, E3, En), en particulier pour chacune des deux à 100 configurations finales détectées (E, E1, E2, E3, En), sur la base de ladite moins une zone d'intérêt (401, 402, 403, 404) et/ou du résultat (A1, A2, A3, A4) associé à la classification pour la configuration finale respective (E, E1, E2, E3, En).

3. Procédé selon l'une quelconque des revendications précédentes, dans lequel le réseau neuronal entraîné est réalisé pour déterminer pour au moins une configuration finale (E, E1, E2, E3, En) au moins une première zone d'intérêt (401, 402, 403, 404) et pour la même configuration finale (E, E1, E2, E3, En) au moins une deuxième zone d'intérêt (401, 402, 403, 404) spatialement différente de la première zone d'intérêt à partir de ladite au moins une image détectée, et le réseau neuronal est en outre réalisé pour tenir compte pour la classification en outre d'un paramètre relatif, en particulier d'une position relative, de ladite au moins une première zone d'intérêt (401, 402, 403, 404) et de la deuxième zone d'intérêt (401, 402, 403, 404) et pour déterminer un résultat (A1, A2, A3, A4) associé à la classification, et dans lequel le réseau neuronal entraîné est appliqué (S4, S5) à ladite au moins une image, dans lequel un signal de commande est généré et émis (S6) pour ladite au moins une configuration finale (E, E1, E2, E3, En) à l'aide du résultat (A1, A2, A3, A4) de la classification tenant compte de la position relative.

4. Procédé selon l'une quelconque des revendications précédentes, dans lequel la détection (S3) de l'image de ladite au moins une configuration finale (E, E1, E2, E3, En) est effectuée au moyen d'un équipement de capture d'image numérique (300), dans lequel ladite au moins une zone d'intérêt (401, 402, 403, 404) est représentée par au moins 20 pixels, de préférence par plus de 50 pixels.

5. Procédé selon l'une quelconque des revendications précédentes, dans lequel au moyen du signal de commande, un affichage graphique de ladite au moins une zone d'intérêt déterminée (401, 402, 403, 404) est provoqué sur une image montrant ladite au moins une configuration finale (E, E1, E2, E3, En), en particulier sur l'image à laquelle le réseau neuronal entraîné a été appliqué, en particulier sous forme de bordure colorée (R1, R2, R3, R4) de ladite au moins une zone d'intérêt déterminée (401, 402, 403, 404), sur un équipement de sortie d'image (800).

6. Procédé selon l'une quelconque des revendications précédentes, dans lequel au moyen du signal de commande, un affichage graphique du résultat (A1, A2, A3, A4) de la classification pour ladite au moins une configuration finale (E, E1, E2, E3, En) est provoqué sur une image montrant ladite au moins une configuration finale (E, E1, E2, E3, En), en particulier sur l'image à la base de la classification, sur un équipement de sortie d'image (800).

7. Procédé selon la revendication 6, dans lequel au moyen de l'affichage graphique, une image de défaut associée au résultat (A1, A2, A3, A4) de la classification est représentée sous la forme d'une désignation d'image de défaut (A1, A2, A3, A4).

8. Procédé selon la revendication 7, dans lequel au moyen de l'affichage graphique, une probabilité (A1, A2, A3, A4) est représentée pour de l'image de défaut déterminée.

9. Procédé selon l'une quelconque des revendications précédentes, dans lequel au moyen du signal de commande, le fonctionnement de l'unité de traitement de câble (200) est influencé (S9) de telle sorte que la configuration finale (E, E1, E2, E3, En) d'un tronçon de câble (K) à traiter successivement dans le temps au moyen de l'unité de traitement de câble (200) est rapprochée d'une configuration finale (E, E1, E2, E3, En) souhaitée.

10. Procédé selon l'une quelconque des revendications précédentes, dans lequel au moyen du signal de commande, un traitement de câble ultérieur d'une unité de traitement de câble ultérieur (201) placée dans le processus en aval de l'unité de traitement de câble (200) d'au moins une configuration finale classifiée (E, E1, E2, E3, En) est influencée en fonction du résultat (A1, A2, A3, A4) de la classification de cette configuration finale (E, E1, E2, E3, En).

11. Procédé selon l'une quelconque des revendications précédentes, dans lequel au moyen du signal de commande, une élimination d'un tronçon de câble (K) ayant une configuration finale (E, E1, E2, E3, En) à image de défaut de la suite du processus de fabrication est provoquée, dans lequel une élimination est effectuée si le résultat (A1, A2, A3, A4) de la classification pour cette configuration finale correspond à une image de défaut prédéfinie ayant une probabilité supérieure à une valeur seuil de probabilité prédéfinie et ne peut pas être corrigée au moyen d'une unité de traitement de câble ultérieur (202).

12. Dispositif de traitement de câble (100), présentant :
- au moins une unité de traitement de câble (200) qui est réalisée pour recevoir au moins un tronçon de câble (K), en particulier une extrémité de câble, et pour la traiter de telle sorte que ledit au moins un tronçon de câble (K) est amené d'une configuration initiale à une configuration finale (E, E1, E2, E3, En),
- un équipement de capture d'image (300), disposé et réalisé pour capturer au moins une image de ladite au moins une configuration finale (E, E1, E2, E3, En),
- un équipement d'évaluation (500) et un équipement de commande (700) pour commander et/ou réguler le dispositif de traitement de câble (100), dans lequel l'unité d'évaluation (500) est en relation fonctionnelle avec l'équipement de capture d'image (300) et l'équipement de commande (700), et dans lequel dans l'équipement d'évaluation (500) et/ou dans l'équipement de commande (700) du code programme (600) lisible par machine peut être chargé qui provoque lors de son exécution l'exécution du procédé selon l'une quelconque des revendications précédentes.

13. Code programme lisible par machine pour un équipement d'évaluation et/ou un équipement de commande qui comprend des instructions de commande qui, lorsqu'elles sont exécutées au moyen de l'équipement d'évaluation et/ou de l'unité de commande provoquent l'exécution du procédé selon l'une quelconque des revendications précédentes.

14. Equipement de commande et/ou d'évaluation, comprenant du code programme lisible par machine qui comprend des instructions de commande qui, lorsqu'elles sont exécutées au moyen de l'équipement d'évaluation et/ou de l'équipement de commande, provoquent l'exécution du procédé selon l'une quelconque des revendications précédentes.
